# EUROPEAN PATENT APPLICATION

(11) **EP 2 299 701 A1**
(43) Date of publication of application: **23.03.2011**
(21) Application number: 09773356.2
(22) Date of filing: 24.06.2009
(51) Int. Cl.: H04N 5/91, H04N 5/225, H04N 5/232

(54) **IMAGING DEVICE, IMAGE DISPLAY DEVICE, AND ELECTRONIC CAMERA**

(30) Priority: 01.07.2008 JP 2008172343; 14.07.2008 JP 2008182672
(71) Applicant: Nikon Corporation, Tokyo 100-8331 (JP)
(72) Inventor: TAKAHASHI, Isao, Chitoda-ku Tokyo 100-8331 (JP)
(74) Representative: Hewett, Jonathan Michael Richard
(86) International application number: PCT/JP2009/061490
(87) International publication number: WO 2010/001778

(57) **Abstract**

An imaging device includes: an imaging unit that photographs an image; a position measurement unit that measures a photographic position when the image is photographed by the imaging unit; a control unit that determines whether or to not to record data for the photographic position along with the photographed image; and a recording unit that, according to a determination by the control unit, either records only the photographed image, or records the photographed image and the data for the photographic position.

## Description

### TECHNICAL FIELD

The present invention relates to an imaging device, to an image display device, and to an electronic camera equipped with such an image display device.

### BACKGROUND ART

A method of supplying positional data is known (for example, refer to Patent Document #1), with which it is arranged for a mobile terminal to send, to a position processing system, data of limited accuracy that designates a desired accuracy limit related to its own positional data has been commanded, and with which it is arranged for the position processing system to supply positional data the mobile terminal that is limited to the desired accuracy.

Furthermore a prior art camera is known (for example, refer to Patent Document #2) that, along with an image that has been photographed, also records on a photographic film position measurement data and information related to the accuracy of that position measurement data.

Patent Document #1: Japanese Laid-Open Patent Publication 2001-320759.
Patent Document #2: Japanese Laid-Open Patent Publication H09-127594.

### DISCLOSURE OF THE INVENTION

### PROBLEMS TO BE SOLVED BY THE INVENTION

Now, when adding to a captured image positional data for its place of photography, sometimes it may be desired to vary the accuracy of the positional data according to the position of photography. For example, if the place of photography is in the vicinity of a private dwelling, then it is necessary to impose a limit on the accuracy of the positional data of the place of photography from the viewpoint of privacy protection; while, if the place of photography is a tourist spot, then accurate positional data is desirable, in order for the place of photography to be known accurately.
However, with the above described prior art method of supplying positional data, it is necessary to issue a command for a limit on the accuracy of the positional data each time photography is performed, and if operation to issue this command is neglected, then accurate positional data in the vicinity of a private dwelling may come to be published along with a photograph of the vicinity of the private dwelling.

Moreover, while the camera described in Patent Document #2 is able to detect the position and so on at which the user has performed photography of an image after using the position measurement data, sometimes it may happen that the position of photography is recognized erroneously, if the reliability of the position measurement data is low.

### MEANS FOR SOLVING THE PROBLEMS

According to the 1st aspect of the present invention, an imaging device comprises: an imaging unit that photographs an image; a position measurement unit that measures a photographic position when the image is photographed by the imaging unit; a control unit that determines whether or to not to record data for the photographic position along with the photographed image; and a recording unit that, according to a determination by the control unit, either records only the photographed image, or records the photographed image and the data for the photographic position.
According to the 2nd aspect of the present invention, in the imaging device according to the 1st aspect, it is preferred that the control unit determines whether or not to record the data for the photographic position along with the photographed image, based on the photographic position.
According to the 3rd aspect of the present invention, in the imaging device according to the 2nd aspect, it is preferred that: the imaging device further comprises an accuracy storage unit that sets whether or not to record photographic position data in a specified region having a predetermined extent, and a recording accuracy for the photographic position data in case that the photographic position data is to be recorded; and the control unit compares the photographic position with the specified region in the accuracy storage unit and determines whether or not to record the data for the photographic position and a recording accuracy for the data for the photographic position in case that the data for the photographic position is to be recorded along with the photographed image.
According to the 4th aspect of the present invention, in the imaging device according to the 2nd or the 3rd aspect, it is preferred that: the imaging device further comprises a person storage unit that stores characteristics for a specific person, and a person recognition unit that recognizes the specific person in the photographed image by referring to the person storage unit; and the control unit converts the recording accuracy for the data for the photographic position to low accuracy, if the specific person has been recognized in the photographed image.
According to the 5th aspect of the present invention, in the imaging device according to the 3rd or the 4th aspect, it is preferred that: the position measurement unit outputs a position measurement accuracy of the data for the photographic position; and if the position measurement accuracy is lower than the recording accuracy determined by the control unit, the control unit repeatedly measures the photographic position with the position measurement unit, until the position measurement accuracy meet the recording accuracy.
According to the 6th aspect of the present invention, in the imaging device according to the 1st aspect, it is preferred that the control unit determines whether or not to record the data for the photographic position along with the photographed image, based on the photographed image.
According to the 7th aspect of the present invention, in the imaging device according to the 6th aspect, it is preferred that: the imaging device further comprises a person storage unit that stores characteristics for a specific person, and a person recognition unit that refers to the person storage unit, and recognizes the specific person in the photographic image; and the control unit determines the recording accuracy according to whether or not the specific person has been recognized in the photographed image by the person recognition unit.
According to the 8th aspect of the present invention, an imaging device, comprises: an imaging unit that photographs an image; a position measurement unit that measures a photographic position when the image is photographed by the imaging unit; a control unit that determines a recording accuracy for data for the photographic position measured by the position measurement unit; and a recording unit that records the photographed image, the data for the photographic position, and the recording accuracy determined by the control unit.
According to the 9th aspect of the present invention, in the imaging device according to the 8th aspect, it is preferred that the control unit determines the recording accuracy for the data for the photographic position based on the photographic position.
According to the 10th aspect of the present invention, in the imaging device according to the 8th aspect, it is preferred that the control unit determines the recording accuracy for the data for the photographic position based on the photographed image.
According to the 11th aspect of the present invention, in the imaging device according to any one of the 3rd through 10th aspects, it is preferred that the imaging device further comprises a display control unit that changes a way in which the photographed image recorded by the recording unit is displayed, according to the recording accuracy recorded by the recording unit.
According to the 12th aspect of the present invention, an image display device, comprises: an image file search unit that finds an image file having a position measurement accuracy higher than or equal to a predetermined position measurement accuracy from among a plurality of image files each having position measurement data and information for position measurement accuracy of the position measurement data; and an image file display control unit that displays an image of an image file that has been found by the image file search unit upon a display device.
According to the 13th aspect of the present invention, in the image display device according to the 12th aspect, it is preferred that the image file display control unit displays images for image files that have been found in sequence, in order from an image of an image file whose position measurement accuracy is the highest through to an image of an image file whose position measurement accuracy is the lowest.
According to the 14th aspect of the present invention, in the image display device according to the 12th or the 13th aspect, it is preferred that the image file display control unit displays an image of an image file whose position measurement accuracy is high as larger, as compared to an image of an image file whose position measurement accuracy is low.
According to the 15th aspect of the present invention, in the image display device according to any one of the 12th through 14th aspects, it is preferred that: the image display device further comprises a current position detection unit that detects a current position of the image display device; and the image file search unit searches, among the plurality of image files, for image files that each have position measurement data matching the current position detected by the current position detection unit, or that each have position measurement data with a position within a predetermined distance from the current position, and finds, from among the image files that have been searched, image files that each have a position measurement accuracy higher than or equal to the predetermined position measurement accuracy.
According to the 16th aspect of the present invention, in the image display device according to the 12th aspect, it is preferred that: the image display device further comprises a current position detection unit that detects a current position of the image display device; and the image file display control unit displays the image of the image file in sequence, in order according to a value obtained by multiplying a distance from the current position to a position of the position measurement data by the position measurement accuracy.
According to the 17th aspect of the present invention, in the image display device according to the 16the aspect, it is preferred that the image file search unit searches, among the plurality of image files, for image files that each have position measurement data matching the current position detected by the current position detection unit, or that each have position measurement data with a position within a predetermined distance from the current position, and finds, from among the image files that have been searched, image files that each have a position measurement accuracy higher than or equal to the predetermined position measurement accuracy.
According to the 18th aspect of the present invention, in the image display device according to any one of the 12th through 17th aspects, it is preferred that the image file display control unit displays the image of the image file along with a map of a region around a position of the position measurement data in the image file.
According to the 19th aspect of the present invention, in the image display device according to the 18th aspect, it is preferred that: the image display device further comprises a map scale change unit that changes a scale of the map; the image file search unit, when the scale of the map is changed by the map scale change unit, performs searching after having changed the predetermined position measurement accuracy based on the scale of the map that has been changed; and the image file display control unit displays the image of the image file found by the image file search unit, along with the map whose scale has been changed by the map scale change unit.
According to the 20th aspect of the present invention, in the image display device according to any one of the 12th through 17th aspects, it is preferred that the image file display control unit displays the image of the image file along with a radar chart.
According to the 21set aspect of the present invention, in the image display device according to the 13th aspect, it is preferred that the image display device further comprises an image input unit that inputs a selected image from among images displayed by the image file display control unit, and a map display control unit that displays a map of a region around a position of the position measurement data in the image file of the image inputted by the image input unit.
According to the 22nd aspect of the present invention, in the image display device according to the 21st aspect, it is preferred that the map display control unit determines the scale of the map that is displayed based on the position measurement accuracy in the image file of the image inputted by the image input unit.
According to the 23rd aspect of the present invention, in the image display device according to any one of the 12th through 22nd aspects, it is preferred that: the image display device further comprises a position measurement accuracy input unit that inputs a position measurement accuracy; and the image file search unit performs searching by taking the position measurement accuracy inputted by the measurement accuracy input unit as the predetermined measurement accuracy.
According to the 24th aspect of the present invention, an electronic camera, comprises an image display device according to any one of the 12th through 23rd aspects.

### ADVANTAGEOUS EFFECT OF THE INVENTION

Since, according to the present invention, it is arranged to determine whether or not to record the position at which an image is photographed and also the accuracy of the photographic position to be recorded, accordingly it is possible to prevent the place of photography being mistakenly published along with an image, although it is not desired thus to publish it. Moreover, it is possible to display only image files having an accuracy of position measurement greater than or equal to a predetermined level.

### BRIEF DESCRIPTION OF THE DRAWINGS

Fig. 1 is a figure showing the structure of a first embodiment;
Fig. 2 is a flow chart showing conversion processing for photographic positional data, in this first embodiment;
Fig. 3 is a flow chart showing requested accuracy determination processing for positional data, in this first embodiment;
Fig. 4 is a figure showing people databases A5, B5, and C5;
Fig. 5 is a figure showing accuracy conversion databases A8, B8, and C3;
Fig. 6 is a figure showing requested accuracy tables A9, B9, and C4;
Fig. 7 is a figure showing a flow chart of display processing that is executed by a display processing unit A10 of a camera A;
Fig. 8 is a figure showing accuracy conversion databases A8, B8, and C3 used in a second embodiment;
Fig. 9 is a figure showing the external appearance of an electronic camera according to a third embodiment of the present invention;
Fig. 10 is a block diagram for explanation of the structure of this electronic camera according to this third embodiment of the present invention;
Fig. 11 is a figure for explanation of the structure of an image file;
Fig. 12 is a figure for explanation of an image display method for an image file, in this third embodiment of the present invention;
Fig. 13 is a flow chart for explanation of an image display process for an image file, in this third embodiment of the present invention;
Fig. 14 is a flow chart for explanation of a variant embodiment of this image display method for an image file, in this third embodiment of the present invention;
Fig. 15 is a figure for explanation of an image display method for an image file, in a fourth embodiment of the present invention;
Fig. 16 is a flow chart for explanation of an image display process for an image file, in this fourth embodiment of the present invention;
Fig. 17 is a figure for explanation of a variant embodiment of this image display method for an image file, in this fourth embodiment of the present invention;
Fig. 18 is a flow chart for explanation of a variant embodiment of this image display process for an image file, in this fourth embodiment of the present invention;
Fig. 19 is a figure for explanation of an image display method for an image file, in a fifth embodiment of the present invention;
Fig. 20 is a flow chart for explanation of an image display process for an image file, in this fifth embodiment of the present invention;
Fig. 21 is a figure for explanation of an image display method for an image file, in a sixth embodiment of the present invention;
Fig. 22 is a flow chart for explanation of an image display process for an image file, in this sixth embodiment of the present invention;
Fig. 23 is a figure for explanation of an image display method for an image file, in a seventh embodiment of the present invention;
Fig. 24 is a figure for explanation of an image display method for an image file, in this seventh embodiment of the present invention;
Fig. 25 is a flow chart for explanation of an image display process for an image file, in this seventh embodiment of the present invention; and
Fig. 26 is a figure for explanation of a variant embodiment of an image display method for an image file, in an embodiment of the present invention.

### BEST MODES FOR CARRYING OUT THE INVENTION

### Embodiment 1

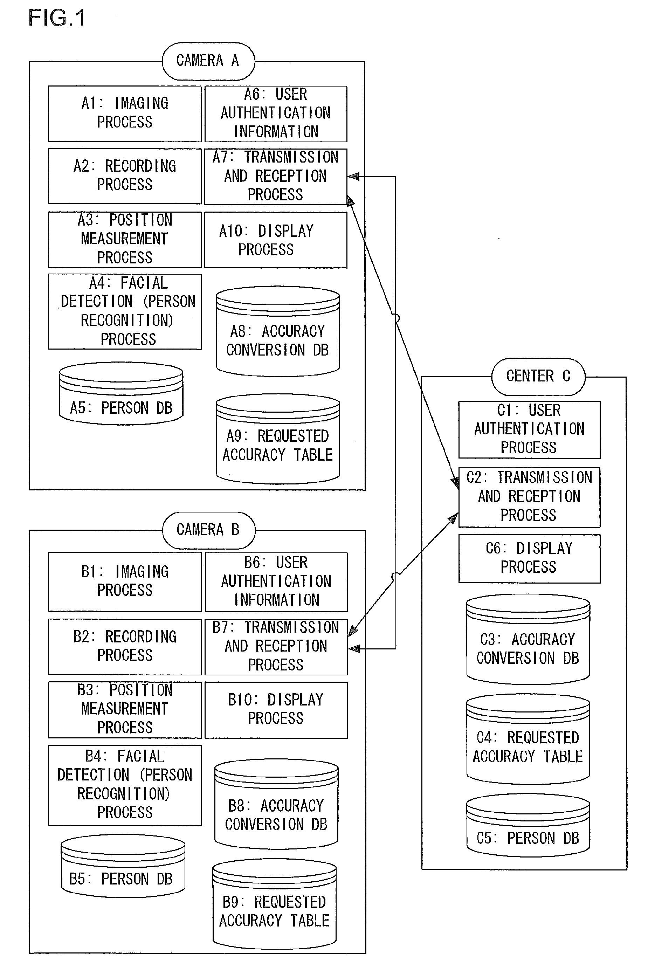

Fig. 1 is a figure showing the structure of an embodiment of this invention. A camera A and a camera B are in a mutually "linked relationship", such as for example the relationship of being owned by the same owner or the like. In other words they are two cameras for which, when adding positional data for the place of photography to an image that has been photographed, databases that are referred to in order to convert the positional data (i.e. accuracy conversion databases, requested accuracy tables, people databases, and so on) are exactly the same. In some cases, the photographer may possess a single lens reflex camera and a compact camera, and may divide his usage between them, according to the photographic subject and the photographic conditions and so on. In this type of case, for example, the single lens reflex camera may be taken as the camera A while the compact camera may be taken as the camera B, and the same data related to accuracy conversion may be shared between them.

Furthermore, the center C holds a database that can be employed by authentication of the same ID by the camera A and the camera B that are in the above "mutually linked relationship". If this database in the center C is used for converting the accuracy of the positional data of the place of photography, it would also be acceptable for no databases to be provided in the camera A and the camera B. It should be understood that it would be acceptable for the camera A and the camera B to be identical cameras; or they may be cameras of different types, such as one being a single lens reflex camera and the other being a compact camera, or the like.

In the following, elements that are included in each of the camera A, the camera B, and the center C and that are similar will be explained together. A photographic processing unit A1, B1 includes a photographic lens, an imaging element (an image sensor), and an image processing device and so on not shown in the figures, and executes various types of processing for photographing an image of a photographic subject. A recording processing unit A2, B2 records the image of the photographic subject that has been captured by the photographic processing unit A1, B1 upon a recording device such as a memory card or the like. While the details will be explained hereinafter, it should be understood that positional data for the place of photography is recorded along with the image that has been photographed. A position measurement processing unit A3, B3 performs measurement of the position of the place of photography at the same time that the photographic processing unitAl, B1 performs photography, and detects the latitude X and the longitude Y of the place of photography. It should be understood that, for the method of position measurement, various per se known methods such as GPS position measurement, WiFi position measurement, base station position measurement with a portable telephone device and so on may be employed; the position of photography is detected with at least one of these methods of position measurement.

A facial detection (person recognition) processing unit A4, B4 makes a decision as to whether or not a person who has been registered in advance is photographed in an image that has been captured by the photographic processing unit A1, B1.

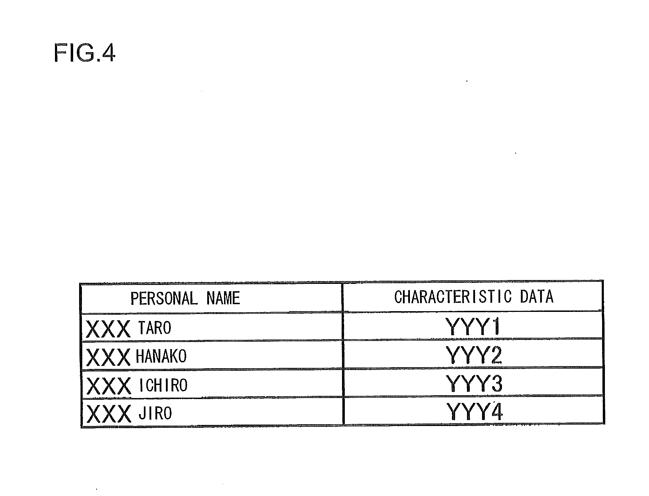

Fig. 4 shows characteristic (characteristic weighting) data related to specific persons stored in a people database A5, B5, C5. The facial image of a person whom the owner of the camera A and the camera B wishes to be recognized is taken as a template image, and its characteristic data is registered in advance by being stored in the people database A5, B5, C4 in correspondence with his or her personal name. The facial detection (person recognition) processing unit A4, B4 compares together the characteristic data of the people who are registered in the people database A5, B5, C5 and the image that has been photographed by the photographic processing unitAl, B1, and determines whether or not any person who has been registered in advance is present within the captured image using a per se known facial recognition technique.

A user authentication information unit A6, B6 stores ID information for, when data of various types stored in the center C is to be utilized, authenticating whether or not the user is a contracted user who has been registered in a database in advance. And a user authentication processing unit C1 of the center C compares together ID information for the contracted users who are registered in advance, and the ID information sent from the camera A or the camera B, and, if they agree with one another, supplies data of various types that has been stored in advance for the contracted user to the camera A or to the camera B. A transmission and reception processing unit A7, B7, C2 performs transmission and reception of various types of data between the camera A, the camera B, and the center C. And a display processing unit A10, B10 reads out an image that has been recorded by the recording processing unit A2, B2 to a recording device such as a memory card or the like, and performs processing to display this image upon a monitor on the rear surface of the camera (not shown in the figures) or the like.

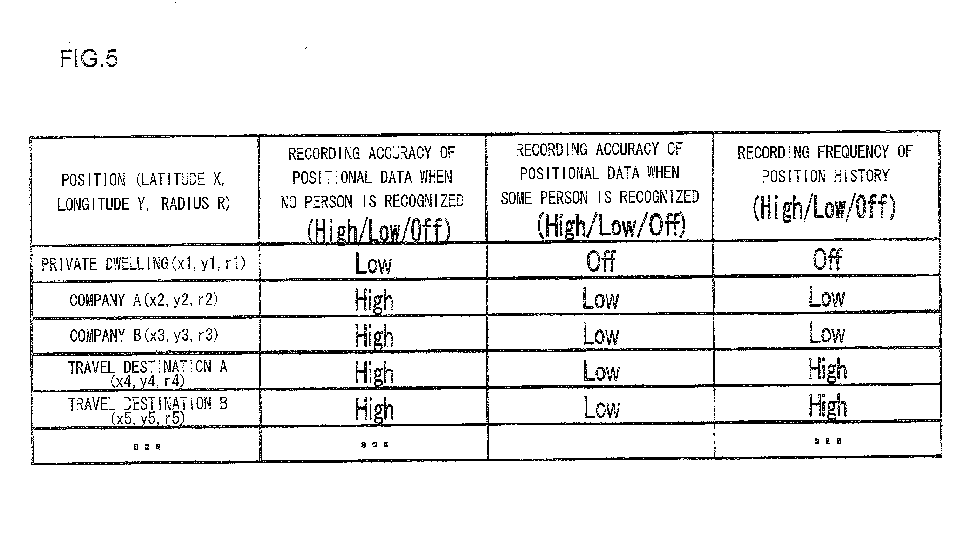

Fig. 5 is a figure showing accuracy conversion databases A8, B8, and C3. These accuracy conversion databases A8, B8, and C3 are databases for, if a place of photography detected by a position measurement processing unit A3 or B3 is within a region that has been registered in advance, converting positional data for that place of photography to an accuracy that corresponds to the registered region.

In Fig. 5, the region is a region that has been set in advance by the user with some latitude X and some longitude Y and with a radius R, taken as being centered at that latitude and longitude. The recording accuracy for positional information when no person has been recognized is the requested accuracy for positional data that is recorded along with the captured image when no person who has been registered in advance has been photographed within the captured image, and may be set by the user to high accuracy "high" or to low accuracy "low", or to "off" that causes recording of positional data to be prohibited. And the recording accuracy for positional data when some person has been recognized is the requested accuracy for positional data that is recorded along with the captured image when some person who has been registered in the people database A5, B5, C5 (refer to Fig. 4) has been recognized by the facial detection (person recognition) processing unit A4, B4 within the captured image, and may be set by the user to high accuracy "high" or to low accuracy "low", or to "off" that causes recording of positional data to be prohibited. Moreover, the frequency at which position history is recorded is the frequency of recording of positional data when detecting the track of shifting of the user who is holding the camera A, B and recording it into a log file, and may be set by the user to high frequency "high" or to low frequency "low", or to "off" that causes no recording to be performed.

Using a map interface or the like, the user is able to register regions such as regions around private dwellings, regions around companies at which people work, and regions that are travel destinations in the accuracy conversion database A8, B8, C3; and, for each such region, he is also able to register a recording accuracy for positional data when no person is recognized, a recording accuracy for positional data when some person is recognized, and a recording frequency for position history. And if the user possesses two cameras A and B, when he performs registration or updating of data related to regions or accuracy in the accuracy conversion database A8 of one of the cameras A, then registration or updating of the same data is automatically performed in the accuracy conversion database B8 of the other camera B via the transmission and reception processing units A7 and B7. Moreover, if the user has entered into a service contract related to positional data of places of photography with the center C, then, when registration or updating of data related to regions or accuracy is performed in the accuracy conversion database A8 or B8 of the camera A or the camera B, registration or updating of the same data is automatically performed in the accuracy conversion database C3 of the center C via the transmission and reception processing unit A7 or B7 and the transmission and reception unit C2.

It should be understood that, if the place of photography is not within some region that is registered in the accuracy conversion database A8, B8, C3, then default values that are stored in the camera A, B in advance are set in the recording accuracy of positional data when no person is recognized, in the recording accuracy of positional data when some person is recognized, and in the recording frequency of position history.

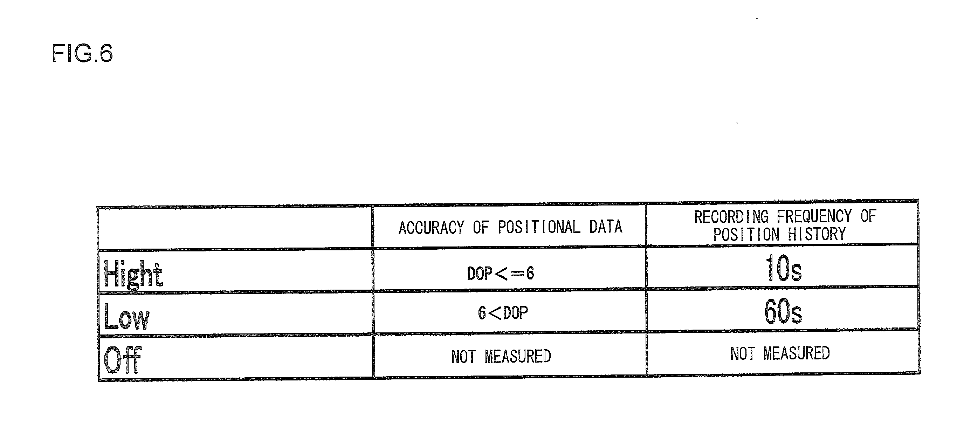

Fig. 6 is a figure showing the requested accuracy tables A9, B9, and C4. These requested accuracy tables A9, B9, and C4 are tables in which the recording accuracy of positional data is set to "high", "low", or "off" and the recording frequency for position history is set to "high", "low", or "off", and they may be set by the user as desired. For the positional data recording accuracy that accompanies positional data from GPS position measurement, for example, as shown in Fig. 6, according to the DOP (Dilution Of Precision) which is an indicator of accuracy deterioration that is supplied, this is set to high accuracy "high" for positional data whose DOP is 6 or less, and to low accuracy "low" for positional data whose DOP is greater than 6. Furthermore, for the recording frequency for position history, as for example shown in Fig. 6, this is set to high accuracy "high" if the position history is recorded once every ten seconds, and is set to low accuracy "low" if the position history is recorded once every sixty seconds. It should be understood that these are set to "off" if the positional data or the position history are not recorded.

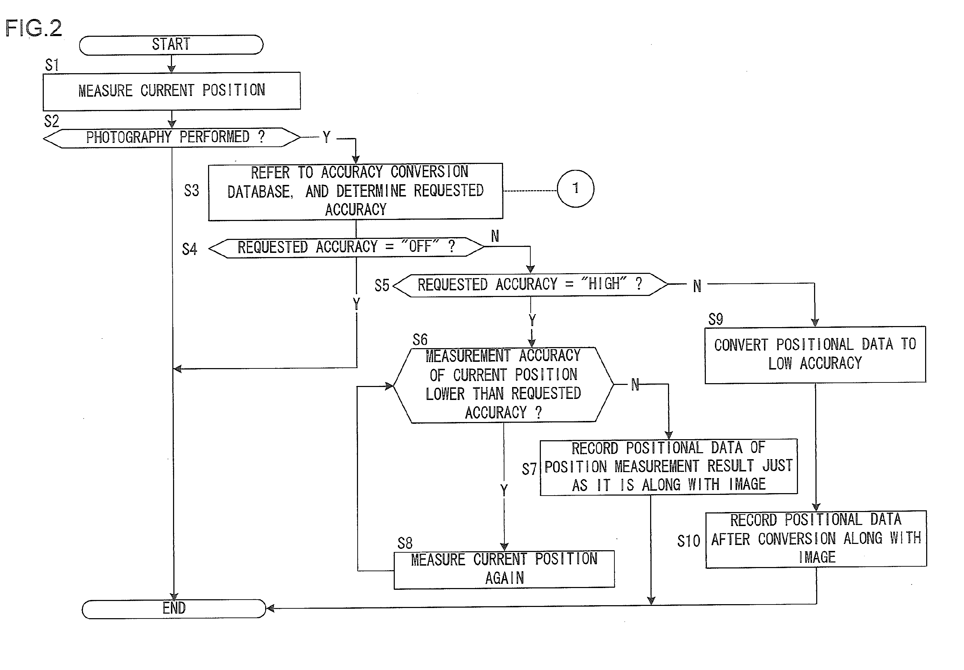

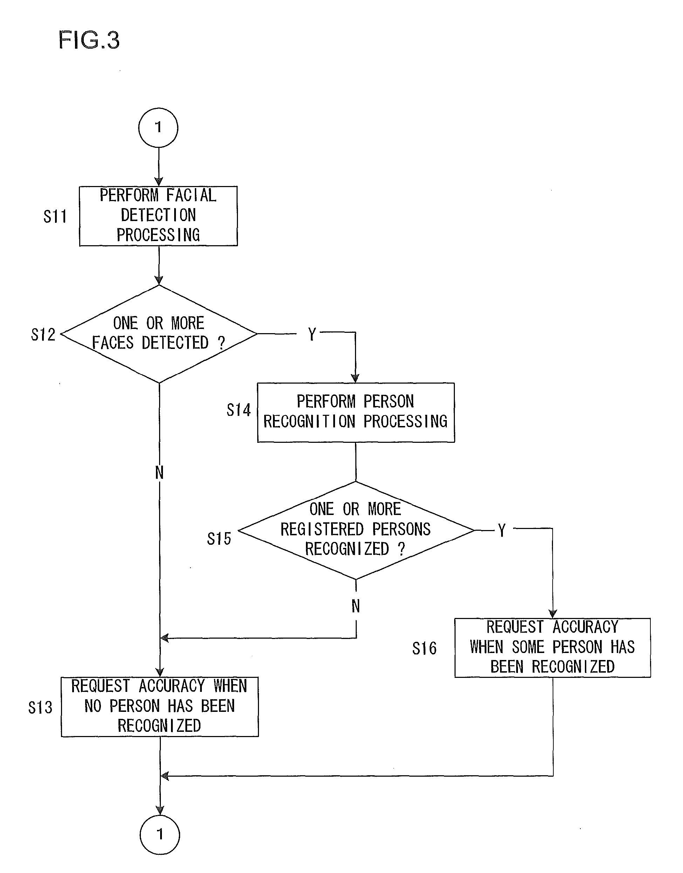

Figs. 2 and 3 are flow charts showing conversion processing for the accuracy of positional data in the first embodiment. The camera A and the camera B execute this processing at predetermined time intervals (for example, ten seconds) while their power supplies are turned on. It should be understood that, while here the accuracy conversion processing performed by the camera A is explained, the same processing is performed by the camera B. In a step 1 of Fig. 2, the current position is measured by the position measurement processing unit A3, and the latitude, longitude, and DOP are detected as positional data. Then in a step 2 it is determined by the photographic processing unit A1 whether or not photography has been performed, and if photography is not being performed then this processing terminates. It should be understood that still image photography, moving image photography, and image photography with audio attached are here all included in "photography".

If photography has been performed the flow of control proceeds to a step 3, in which the accuracy conversion database A8 is referred to, and the requested accuracy for the positional data recorded along with the captured image is determined. This processing for determining the requested accuracy is performed by executing the subroutine of Fig. 3. In a step 11 of Fig. 3, human faces are detected in the captured image. For this facial detection processing a per se known method may be used, but here it is sufficient to proceed as far as recognition that at least one human face is present; there is no need to determine whose the face or faces that have been recognized are.

In a step 12 it is determined whether or not one or more human faces have been detected, and if no human face is photographed in the captured image then the flow of control proceeds to a step 13, in which the recording accuracy of positional data when no person is recognized is requested. In other words the accuracy conversion database A8 is referred to, it is determined whether or not the measured position of the place of photography (i.e. its latitude and longitude) is within some region that is registered in advance, and the recording accuracy of positional data when no person is recognized corresponding to that region in which the photographic position is included is taken as the requested accuracy. It should be understood that, if the photographic position is not included within any registered region, then a default value that is stored in the camera A in advance is set as the recording accuracy of positional data when no person is recognized.

On the other hand if one or more human faces are photographed in the captured image then the flow of control proceeds to a step 14, in which person recognition processing is performed. In other words, reference is made to the people database A5, and it is determined whether or not a face in the captured image and some template image of a human face that has been registered in advance match one another. If no face in the captured image matches any face of a registered person, in other words if not even one recognized person is recognized in the captured image, then the flow of control is transferred to the step 13 and, as described above, the recording accuracy of positional data when no person is recognized is requested for the region in which the photographic position is located.

But if some face that has been photographed in the captured image and the face of some person registered in advance match one another, in other words if one or more registered persons have been recognized in the captured image, then the flow of control is transferred to a step 16, in which the recording accuracy for positional data when some person is recognized is requested. In other words reference is made to the accuracy conversion database A8, it is determined whether or not the measured position of the place of photography (i.e. its latitude and longitude) is within some region that is registered in advance, and the recording accuracy of positional data when some person is recognized corresponding to that region in which the photographic position is included is taken as the requested accuracy. It should be understood that, if the photographic position is not included within any registered region, then a default value that is stored in the camera A in advance is set as the recording accuracy of positional data when some person is recognized.

When the requested accuracy for the positional data has been determined the flow of control returns to the step 4 of Fig. 2, in which it is determined whether or not the requested accuracy is "off", for which positional data is not recorded. If the requested accuracy is "off" then this processing terminates, while if the requested accuracy is not "off" then the flow of control proceeds to a step 5. In this step 5 it is determined whether or not the requested accuracy for the positional data, corresponding to the region in which it has been decided that the photographic position is located and corresponding to whether or not any person has been recognized, is "high", for which the requested recording accuracy is high, and if high accuracy "high" is being requested then the flow of control proceeds to a step 6.

In this step 6 it is determined whether or not the position measurement accuracy for the current position (i.e. the position measurement accuracy in the step 1) is lower than the requested accuracy. If the position measurement accuracy is indeed lower than the requested accuracy then the flow of control is transferred to a step 8, in which measurement of the current position is again performed by the position measurement processing unit A3. For example if, irrespective of whether or not the requested accuracy corresponding to the region in which it has been decided that the photographic position is located and corresponding to whether or not any person has been recognized is high accuracy "high", the indication of deterioration of the position measurement accuracy DOP is greater than 6 so that the accuracy is low "low", then measurement of the current position is performed again. On the other hand if the position measurement accuracy for the current position is greater than or equal to the requested accuracy, then the flow of control proceeds to a step 7. For example if, when the requested accuracy is high accuracy "high", the indication of deterioration of the position measurement accuracy DOP is less than or equal to 6, then the flow of control proceeds to the step 7, in which the positional data for the position measurement result is recorded just as it is along with the captured image.

If the requested recording accuracy for the positional data corresponding to the region in which it has been decided that the photographic position is located and corresponding to whether or not any person has been recognized is not high accuracy "high", then the flow of control proceeds to a step 9 in which the positional data that is the result of positional measurement is converted to low accuracy. For example if the latitude and longitude of the result of position measurement are "ddmm.mmmm, N/S (north latitude / south latitude), dddmm.mmmm, E/W (east longitude / west longitude)", then the digits below the decimal points may be forcibly set to zero, so that the result of position measurement is converted to "ddmm.0000, N/S (north latitude / south latitude), dddmm.0000, E/W (east longitude / west longitude)". Furthermore, from the address "Tokyo-to, Shinagawa-ku, Nishi-Oo-i 1-6-3", the portions therein that are finer than the "ku" level may be deleted, so that it becomes "Tokyo-to, Shinagawa-ku". And from the telephone number "+81-3-3773-1111" the local number portion may be deleted leaving only the area code, so that it becomes "+81-3". Even further, for a postal code, "140-8601" may become "140".

Here, the conversion of the positional data to low accuracy in the step 9 has no relationship to whether the positional data that is the result of positional measurement is of high accuracy (DOP≤6) or is of low accuracy (DOP>6). For example even if, due to position measurement, a latitude and longitude of low accuracy have been detected, then this latitude and longitude include digits after their decimal points, and in this case this latitude and longitude of low accuracy are converted into low accuracy data by forcibly setting their digits after their decimal points to zero.

After the positional data has been converted to low accuracy, in a step 10 the positional data after conversion is recorded along with the captured image, and then this recording processing terminates. In the step 7 the step 10 described above, information that specifies the recording accuracy is also recorded along with the captured image and the positional data, as a single image file together therewith. As the recording accuracy, information is recorded that, for example, encodes "high", "low", or "off" as described above. In the cases of "high" and "low", it would also be acceptable to arrange for the DOP value to be recorded.

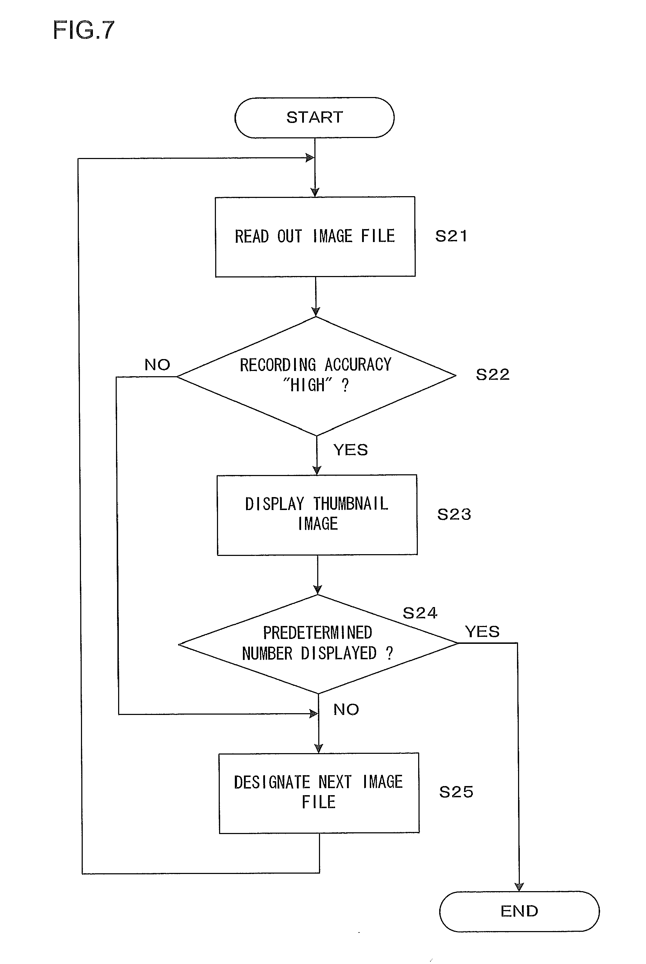

Fig. 7 is a figure showing a flow chart of display processing executed by the display processing unit A10 in the camera A. In concrete terms, the processing of Fig. 7 is performed by a CPU within the camera A executing a predetermined program. In this embodiment, in a normal display mode, only images among image files recorded on a recording device such as a memory card or the like whose recording accuracy is "high" are selected, and thumbnail display thereof is performed upon a rear surface monitor of the camera A. It should be understood that a reference symbol is recorded in some predetermined region of each image file indicating which of "high", "low", and "off" its recording accuracy is, as previously described.

In a step S21, a designated image file is read out from the memory card. When the processing of Fig. 7 is initially started, the most recent image file is read out. Then in a step S22 a decision is made as to whether or not the recording accuracy is "high". If the recording accuracy is "high" then the flow of control proceeds to a step S23, whereas if it is not "high" (i.e. if it is "low" or "off") then the flow of control is transferred to a step S25.

In this step S23, thumbnail image data is read out from the image file that has been read out, and is displayed on a rear surface monitor (not shown in the figures) of the camera A. Then in a step S24 a decision is made as to whether or not a predetermined number of thumbnail images have been displayed on the rear surface monitor. If the predetermined number of images have not yet been displayed then the flow of control proceeds to a step S25. But if the predetermined number of images have been displayed, then this processing flow terminates. In the step S25 the next image file is set, and then the flow of control returns to the step S21 and the processing described above is repeated.

When an operation button, for example a button that issues a "next image" command, is actuated after the processing of Fig. 7 has ended, then the next image file after the image file whose processing has ended the previous time is designated, and the processing of Fig. 7 is repeated. Furthermore, if some thumbnail image is designated in the state when the thumbnail images are being displayed, then the image that corresponds to this thumbnail image is displayed full screen on the rear surface monitor.

By doing this, in this embodiment, it is arranged to display on the rear surface monitor of the camera only those images that have been recorded with "high" recording accuracy. Due to this, it is possible to ensure that images that it is not desired to display are not displayed on the rear surface monitor of the camera. For example, it is possible to ensure that images that have been specified as having positions near private dwellings, or images in which it is specified that some specific person is photographed, or the like, and that are recorded with a recording accuracy of "low" or "off", are not displayed on the rear surface monitor of the camera.

While the processing of Fig. 7 has been explained as being processing performed by the camera A, it should be understood that, processing by the camera B is also performed in a similar manner. Furthermore, it would also be acceptable for the same processing to be performed by a display processing unit C6 of the center C. Moreover, it would also be possible to arrange for the processing of Fig. 7 to be executed upon a personal computer or upon some other image display device. If this processing is performed by the center C or upon a personal computer or the like, then it may be arranged for image files captured by and recorded upon the camera to be stored, via a memory card or by communication, in a storage device (i.e. a database) of the center C or of the personal computer.

Yet further, while in the processing of Fig. 7 it is arranged to display only recorded images whose recording accuracy is "high" upon the rear surface monitor of the camera, this standard could also be changed. It would be acceptable to arrange to display images for which the recording accuracy has been set to "high" or to "low" upon the rear surface monitor of the camera, and not to display images for which the recording accuracy is "off". Moreover, it would also be acceptable to arrange to display those thumbnails for which the recording accuracy is "high" in a larger size than those thumbnails for which the recording accuracy is "low". In this manner, by displaying some images and not displaying others, or by changing the sizes of the images, it is possible to change the way in which the images are displayed to correspond to the accuracies at which they are recorded.

It should be understood that while, in the embodiment described above, an example has been described in which the positional data accuracy when no person has been recognized is requested when no face of any person that has been registered in advance is present within the captured image even though some human face or faces are present, it would also be acceptable to arrange, in this case, not to perform person recognition, and to request the recording accuracy when some person has been recognized if some human face has been detected, or to request a recording accuracy when no person has been requested if no human face has been detected. In other words, it would be acceptable to arrange to determine the recording accuracy that is requested only according to the result of human face detection.

Furthermore, it would also be acceptable to arrange to determine the requested positional data recording accuracy according to the photographic conditions of the image. For example, if the angle of view of photography is wide angle, then it is not necessary for the positional data for the place of photography to be very accurate because the photography has been performed over a wide range, and in this case low accuracy may be requested. On the other hand, in the case of a photograph taken at a telephoto setting, then the photographic subject is tightly narrowed down and it is very necessary for the positional data for the place of photography to be highly accurate, so that in this case high accuracy may be requested.

Moreover while, in the embodiment described above, an example has been described in which the positional data for the captured images is recorded along with the images, it would also be acceptable to record information other than the positional data together. For example, it would be acceptable to arrange to record the number of human faces that have been detected, or the heartbeat rate of the photographer as detected by a sensor, along with the images.

Even further, it would also be acceptable to arrange to change the resolution at which the captured image is recorded according to the recording accuracy for the positional data of the image. For example, the resolution for recording the captured image could be made high if the recording accuracy for the positional data of the image is high.

It should be understood that, with the embodiment described above and variant embodiments thereof, any of the embodiment described above and one or more of its variant embodiments may be combined.

According to the embodiment described above and variants thereof, the following beneficial operational effects may be obtained. First, the position of imaging when a photograph has been taken is measured, and it is determined whether or not to record data for this photographic position along with the captured image, on the basis of the photographic position. In concrete terms, it is arranged to provide a database in which it is set whether or not to record photographic position data for specified regions of predetermined extent and the imaging recording accuracy of that positional data if it is to be recorded, to compare the photographic position with the regions specified in the database, to determine whether or not to record positional data for the image along with the captured image, and the recording accuracy of the positional data for the image if it is to be so recorded. Accordingly, it will automatically determine whether or not to record the photographic positions of images and the recording accuracies for these positions if they are to be recorded, as a result, along with the ease of use being enhanced, also it is also possible to prevent the occurrence of a situation such as one in which a place of photography that it is desired not to publish is mistakenly published along with an image.

Next, since it is arranged to provide a database in which characteristics for specified people are stored, to refer to this database and to recognize the specified people from within captured images, and to convert the accuracy at which the positional data of a captured image is recorded to low accuracy if some specified person has been recognized within that image, accordingly it is possible to prevent the occurrence of a situation such as one in which an accurate address or place of work of some person whom the photographer has set in advance is published along with a captured image.

Furthermore it is possible reliably to record image positional data at the requested accuracy, since, if the position measurement accuracy is lower than the requested accuracy, it is arranged to repeat position measurement by the position measurement means until the position measurement accuracy satisfies the requested accuracy.

### Embodiment 2

In the first embodiment, an example was explained in which accuracy conversion databases A8, B8, and C3 like the one shown in Fig. 5 were employed. In other words, an example was disclosed in which whether or not to record positional data was decided, and the recording accuracy was converted according to combinations of whether or not some person was recognized in the image and what region the place of photography was within. However, in the second embodiment, an example will be explained in which whether or not to record positional data is decided, and the recording accuracy is converted, only on the basis of the image data.

The relationships between the camera A, the camera B, and the center C, and the processing within the cameras, will be omitted, because they are the same as in the first embodiment. Since the only feature that is different are the accuracy conversion databases A8, B8, and C3, in the following, the explanation will be confined to this feature.

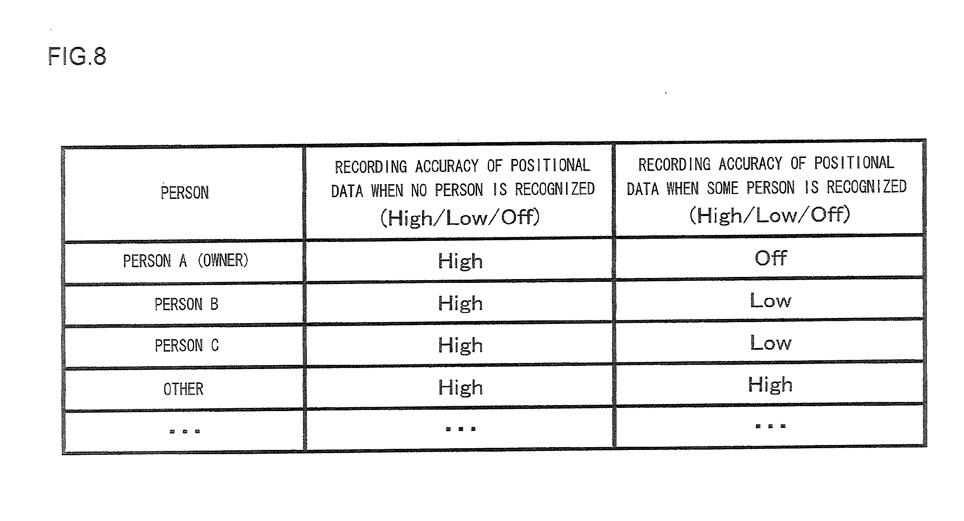

Fig. 8 is a figure showing the accuracy conversion databases A8, B8, and C3 that are used in this second embodiment. In this Fig. 8 example, an example is shown in which the requested recording accuracy for when no person has been recognized is all set to "high"; the requested recording accuracy for when a person has been recognized is set to "off" (i.e. "do not record") in the case of a person A; the requested recording accuracy for the cases of persons B and C is set to "low"; and in the case of other people it is set to "high". For example, the person A may be the owner of the camera himself, while the persons B and C may be his family or intimate friends. In other words, if the owner of the camera himself is being photographed, the very recording of positional data is set to "off", while, for images in which his family or intimate friends are photographed, it is set for conversion of the recording accuracy to "low" to be performed. And "other" persons refers to the case in which, although one or more persons have been photographed in an image, these are people who have no particular relationship to the camera owner.

By using accuracy conversion databases A8, B8, and C8 of this type, it becomes possible to decide whether or not to record positional data and to change the recording accuracy, upon recognition of one or more specific persons. The recording accuracy is not changed according to combinations of the person who is recognized and the location of photography as in the case of the first embodiment; but rather, whether or not to record positional data and changing of the recording accuracy are performed only according to the person who has been recognized. Due to this it is possible to turn the recording of positional data off, or to reduce the recording accuracy when a specified person is photographed, even when it is not specified, or when it is difficult to specify, in what location photography is performed.

It should be understood that while, in the above description, an example was explained in which people were recognized by using the people databases A5, B5, and C5, it would also be acceptable for the subjects that are recognized not to be people but rather photographic subjects of some other type. For example, they could be buildings such as private dwellings, or automobiles that are owned or the like. In other words, instead of characteristic data related to specified persons being stored in the people databases A5, B5, and C5, it would be acceptable to arrange to provide databases in which are stored characteristic data related to some other subjects for recognition.

By doing this, it is possible to turn recording of the positional data off or to change the recording accuracy thereof, even if the specified photographic subject appearing in the image that has been photographed is not only a person. In other words, it is possible to decide whether or not to record the positional data, and to change the recording accuracy for that positional data, on the basis of the captured image.

### Embodiment 3

In the following, an electronic camera according to a third embodiment of the present invention will be explained with reference to the drawings.

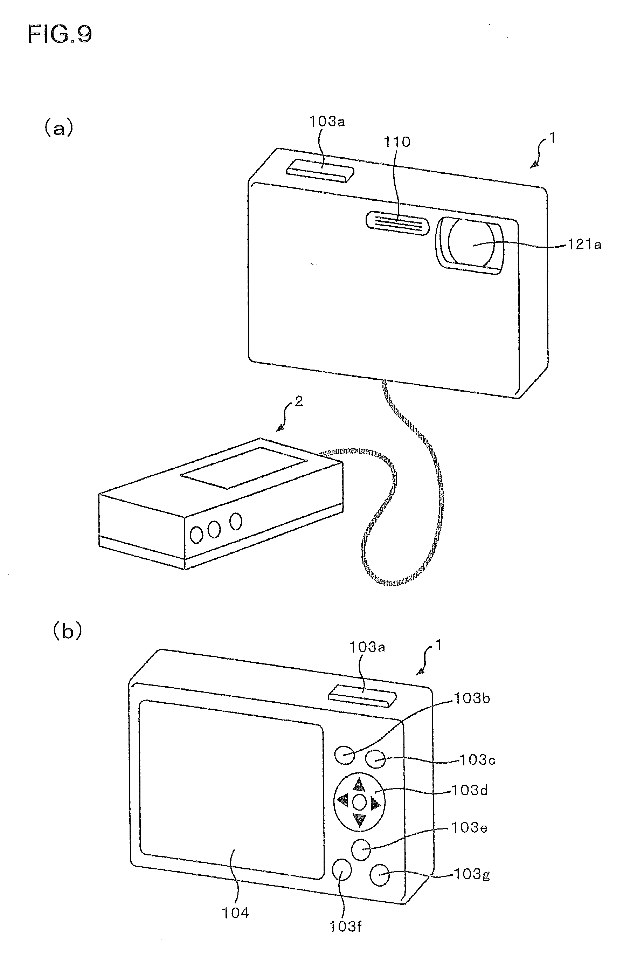

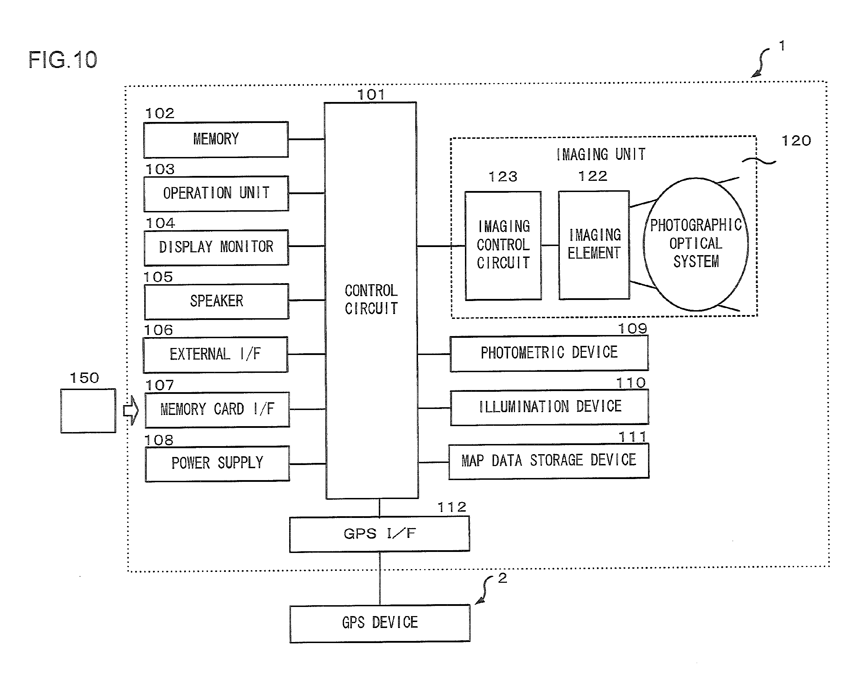

Fig. 9 is a figure showing an electronic camera 1. Fig. 9(a) is a figure showing the electronic camera 1 as seen obliquely from the front, while Fig. 9(b) is a figure showing the electronic camera 1 as seen obliquely from the rear. As shown in Fig. 9(a), a lens 121a of a photographic optical system (see the reference symbol 121 in Fig. 10) and an illumination device 110 that illuminates the photographic subject are provided at the front of the electronic camera 1. Moreover, the electronic camera 1 is connected to a GPS (Global Positioning System) device 2, and is able to acquire position measurement data and also information related to the accuracy of this position measurement data from the GPS device 2. A release switch 103 is provided upon the upper surface of the electronic camera 1.

As shown in Fig. 9(b), a liquid crystal monitor 104 and operation buttons 103b through 103g are provided on the rear surface of the electronic camera 1.

Fig. 10 is a block diagram for explanation of the structure of the electronic camera 1. The electronic camera of Fig. 10 includes a control circuit 101, a memory 102, an operation unit 103, a display monitor 104, a speaker 105, an external interface (I/F) circuit 106, a memory card interface (I/F) 107, a power supply 108, a photometric device 109, an illumination device 110, a map data storage device 111, and a GPS interface (I/F) circuit 112. The electronic camera 1 is connected to the GPS device 2 via the GPS interface circuit 112. Moreover, a memory card 150 is fitted into the memory card interface 107.

On the basis of a control program, the control circuit 101 performs predetermined calculations using signals outputted from various internal units of the electronic camera. The control circuit 101 also controls the photographic operation of the electronic camera 1 by outputting control signals to various internal units of the electronic camera. It should be understood that this control program is stored in a ROM (Read Only Memory) interior to the control circuit 101 and not shown in the figures.

The control circuit 101 creates image files from information about photographic conditions acquired from various internal units of the electronic camera, and from information related to position measurement data acquired from the GPS device and to the accuracy of this position measurement data, and stores these files and so on in the memory 150. These image files are created according to the Exif (Exchangeable image file format) image file rules.

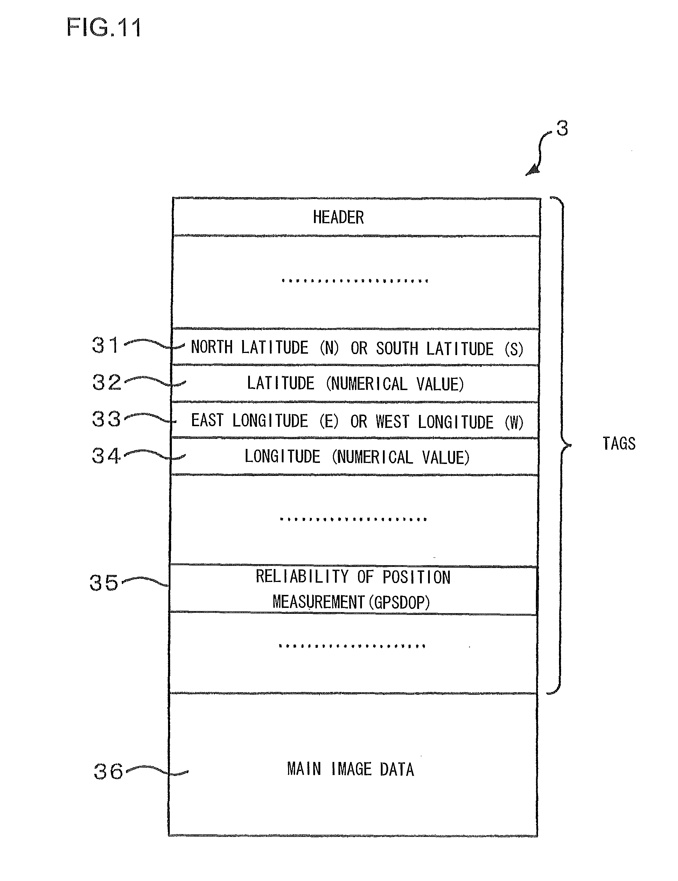

The structure of one of these image files will now be explained with reference to Fig. 11. This image file consists of main image data and a plurality of tags in which information appended to the main image data is included. This plurality of tags include a tag 31 that specifies whether or not the position that has been measured is north latitude or south latitude, a tag 32 that specifies the latitude of the position that has been measured, a tag 33 that specifies whether or not the position that has been measured is east longitude or west longitude, a tag 34 that specifies the longitude of the position that has been measured, and a tag 35 that specifies the reliability of this position measurement, in other words the accuracy of this position measurement. The accuracy of position measurement is given by a DOP (Dilution Of Precision) value. In the following, the data in the tags 31 through 34 will be termed "position measurement data". Normally, this position measurement data 31 through 34 is data for the current position of the user or data for the current position of the device that was used for photography when the user performed photography of the image.

The DOP value may be termed a coefficient of accuracy deterioration, and is an index that specifies the degree by which the accuracy deteriorates due to the geometric configuration of the position measurement satellites. The ideal satellite configuration when position measurement is performed by the position measurement satellites is a configuration in which one satellite is at the zenith and three satellites are spaced apart at 120°, thus defining an equilateral pyramidal shape. The DOP value of this configuration is 1. The factor by which the accuracy is deteriorated in comparison to this ideal configuration is specified as an index of 2, 3, 4, .... In other words, the position measurement accuracy becomes lower as the DOP value increases. The DOP value is calculated by the GPS device 2 according to how small the volume of the triangular pyramid formed by the four position measurement satellites is, as compared to the case of a DOP value of 1.

The memory 102 of Fig. 10 is used as a working memory for the control circuit 101. The operation unit 103 includes the release button 103a and the operation buttons 103b through 103g and so on, and sends actuation signals to the control circuit 101 corresponding to buttons that are pressed. According to commands from the control circuit 101, the memory card interface 107 writes image files to the memory card 150 and reads out image files from the memory card 150. The memory card 150 is an external recording medium that can be fitted to or removed from the memory card interface 107.

The display monitor 104 displays information such as images of image files and text and so on, according to commands from the control circuit 101. A single image can be displayed as large upon the display monitor 104, or a plurality of compressed images (i.e. thumbnails) may be displayed. The speaker 105 outputs audio according to commands from the control circuit 101. And according to commands from the control circuit 101, via a cable not shown in the figures, the external interface circuit 106 transmits and receives commands and data to and from an external device (such as a personal computer, a printer, or the like).

The power supply 108 includes a battery, a power supply circuit and so on, and supplies electrical power to the various sections of the electronic camera 1. The photometric device 109 detects the luminance of the photographic subject with a photometric sensor, and sends luminance information to the control circuit 101. On the basis of this luminance information, the control circuit 101 calculates exposure setting values such as shutter speed and aperture value and so on. If a light emission command has been issued from the control circuit 101 during photography, the illumination device 110 illuminates the photographic subject with a predetermined amount of light, for example by emitting a flash of light. This illumination light is emitted in the forward direction from the electronic camera.

The map data storage device 111 stores map data for displaying maps upon the display monitor 104. And the GPS interface circuit 112 is an interface for connecting the electronic camera 1 to the GPS device 2.

The imaging unit 120 includes the photographic optical system 121, an imaging element (an image sensor) 122, and an imaging control circuit 123, and performs capture of an image of a photographic subject according to a command from the control circuit 101. The photographic optical system 121 images an image of the photographic subject upon an image capture surface of the imaging element 122. A CCD (Charge Coupled Device) imaging element or a CMOS (Complementary Metal Oxide Semiconductor) imaging element or the like may be used as the imaging element 122. The imaging control circuit 123 performs drive control of the imaging element 122 according to commands from the control circuit 101, and also performs predetermined signal processing upon image signals outputted from the imaging element 122. After this signal processing, the data for the image is recorded upon the memory card 150 as an image file that conforms to the Exif rules described above.

The GPS device 2 measures the position of the GPS device 2 on the basis of the times of propagation of radio waves transmitted from position measurement satellites, and on the basis of the positions of those position measurement satellites. Since the radio waves are transmitted from the position measurement satellites in synchronism with an accurate clock, the GPS device 2 is able to calculate these times of propagation from the reception times of the radio waves. Tracking data for the position measurement satellites is included in the radio waves transmitted from the position measurement satellites, and the GPS device 2 is able to calculate the positions of the position measurement satellites from this tracking data. Moreover, the GPS device 2 also calculates the DOP value described above.

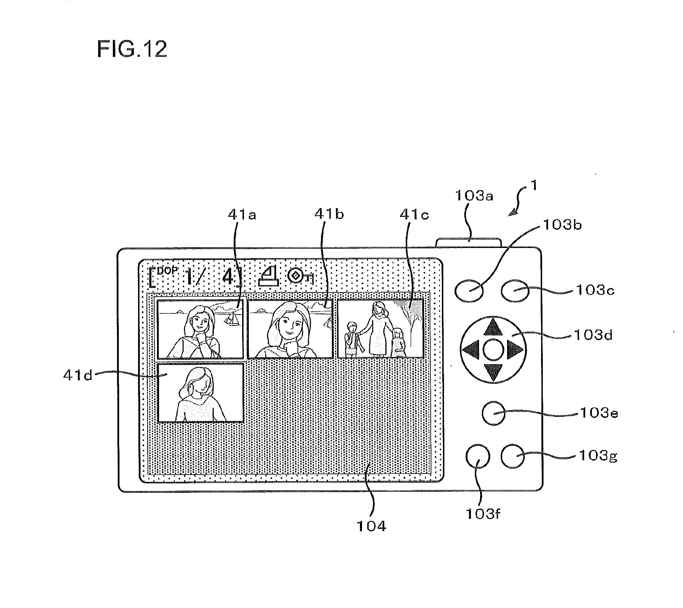

Referring to Fig. 12, the image display method for displaying image files in this third embodiment of the present invention will be explained. Fig. 12 is a figure for explanation of a screen displayed upon the display monitor 104 in which images of image files stored on the memory card 150 are shown. As shown in Fig. 12, images 41a through 41d of image files for which the DOP values are less than or equal to some predetermined value are displayed in sequence upon the display monitor 104 as compressed images. Accordingly, no images are displayed for image files for which the DOP values are greater than that predetermined value. The positions in the position measurement data of these images 41a through 41d are the positions measured by the GPS device 2 that is connected to the electronic camera 1, in other words are almost the same positions as the current position of the electronic camera 1.

Furthermore from left to right, and then from top to bottom, the images 41a through 41d are displayed in order of increasing DOP value from the one whose DOP value is the smallest to the one whose DOP value is the largest, in other words in order from the one whose accuracy of position measurement is the highest to the one for which it is the lowest. Due to this, the user is able to recognize that the image 41a is the one whose accuracy of position measurement is the highest (i.e. is the one whose DOP value is the smallest), and that the accuracy of position measurement becomes worse (i.e. the DOP values become greater) in sequence through the images 41b, 41c, and 41d.

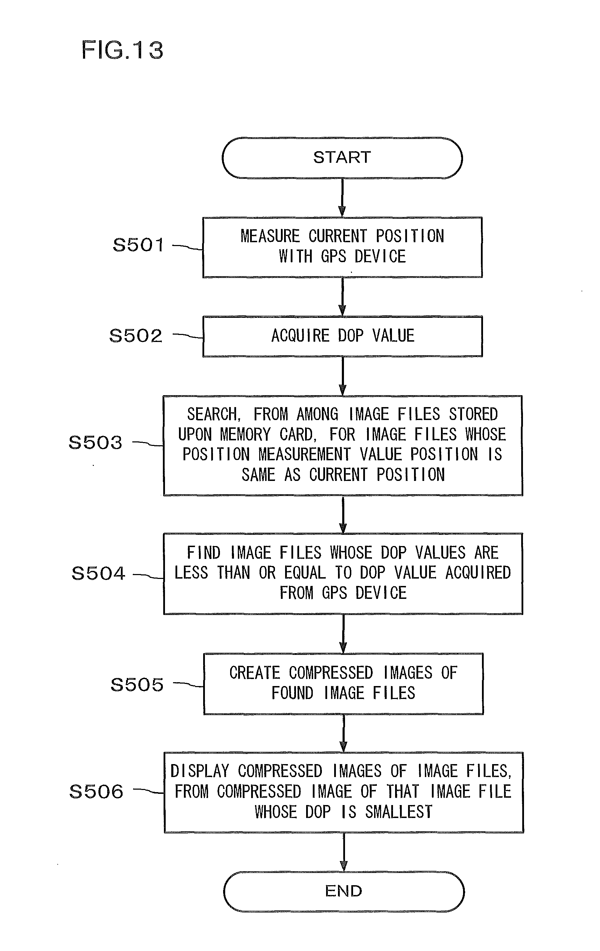

This image display process for image files in this third embodiment of the present invention will now be explained with reference to the flow chart of Fig. 13. The processing of Fig. 13 is executed by the control circuit 101 executing a program that starts when the user actuates the operation buttons 103b through 103g and selects the function of DOP thumbnail display. Here, the expression "DOP thumbnail display" refers to displaying images of image files as compressed images, on the basis of the DOP values of the image files.

In a step S501, the current position is measured by the GPS device 2. Then in a step S502, the DOP value when the current position was measured is acquired from the GPS device 2. And in a step S503, from among the image files stored upon the memory card 150, a search is made for image files having position measurement data that is the same as the current position. Here, being the same as the current position means that the current position and the position specified by the position measurement data are the same within some predetermined permitted range.

Then in a step S504, from among the image files found by the step S503, those image files are found whose DOP values are less than or equal to the DOP value that was acquired from the GPS device 2. And, in the next step S505, compressed images of the image files found in the step S504 are created. Finally, in a step S506, these compressed images of the images in the image files are displayed in sequence from left to right, and from top to bottom, in order from the image of that image file whose DOP value is smallest to the image of that image file whose DOP value is the largest.

According to the third embodiment as explained above, the following beneficial operational effects are obtained. (1) It is arranged to hold the position measurement data 31 through 34 and the position measurement accuracy information 35, to search for image files having a position measurement accuracy greater than or equal to a predetermined value from among a plurality of image files, and to display the images 41a through 41d of the image files that have been found upon the display monitor 104. By doing this, it is possible to display only those image files whose position measurement accuracy is greater than or equal to the predetermined value.

(2) It is arranged to display images for the image files that have been found, in sequence from that image whose position measurement accuracy is the highest to that image whose position measurement accuracy is the lowest. Due to this, it is possible preferentially to select images whose position measurement accuracy is high.

(3) It is arranged to provide the GPS device 2 that detects the current position of the electronic camera 1, to make a search among the plurality of image files for image files having position measurement data that almost matches the current position detected by the GPS device 2, to search from among the image files that have been found for image files whose position measurement accuracy is greater than or equal to a predetermined level, and to display the images 41a through 41d for the image files that have been found upon the display monitor 104. Due to this, it is possible to view scenery that has been photographed while taking, for reference, images that were photographed in the same place at previous times. Moreover, it is possible to remember that one was previously at the same location by using an image that has been displayed as a clue.

The third embodiment described above may be varied in the following ways. (1) In the third embodiment described above, it is arranged to search for image files having position measurement data that almost matches the current position of the electronic camera 1, further to search from among these image files that have been found for image files having position measurement accuracy that is greater than or equal to a predetermined level, and to display the images 41a through 41d of the image files that have been found upon the display monitor 104. However, it would also be acceptable to arrange to find image files having position measurement data within a predetermined distance from the current position of the electronic camera 1, to further search from among these image files that have been found for image files having position measurement accuracy that is greater than or equal to a predetermined level, and to display the images of the image files that have been found upon the display monitor 104. By doing this, it is convenient when it is necessary to have an image file near the current position whose position measurement accuracy is high. For example, this is convenient if it is desired to perform photography near the current position in the same position as when photography was performed in the past, or if it is desired to discover to what extent current scenery has changed as compared to historical scenery, or the like.

(2) In the third embodiment described above, it is arranged to display the images of the image files in sequence, in order from that image whose position measurement accuracy is the highest through to that image whose position measurement accuracy is the lowest. However, it would also be acceptable to arrange to determine the sequence in which the images of the image files are to be displayed according to values that are obtained by multiplying the distances from the current position of their position measurement data by their DOP values, in other words by values that indicate the accuracy of their position measurement data, and to display the images of the image files in that sequence. By doing this, it would be possible to determine the sequence in which the images are ordered by determining combinations of their position measurement accuracies and their distances from the current position. For example this procedure is convenient if it is desired not to select images whose position measurement data are far from the current position no matter how high their position measurement accuracies are, and it is also desired not to select images whose position measurement accuracies are bad no matter how close their position measurement data are to the current position, or the like. It should be understood that it would be acceptable for the images of the image files that are to be displayed to be images for which the positions of the position measurement data are almost the same as the current position of the electronic camera 1; or it would also be acceptable for them to be images for which the positions of the position measurement data are within a predetermined distance from the current position of the electronic camera 1. Furthermore, it would also be acceptable to arrange to display only those images whose position measurement accuracy is greater than or equal to a predetermined position measurement accuracy level.

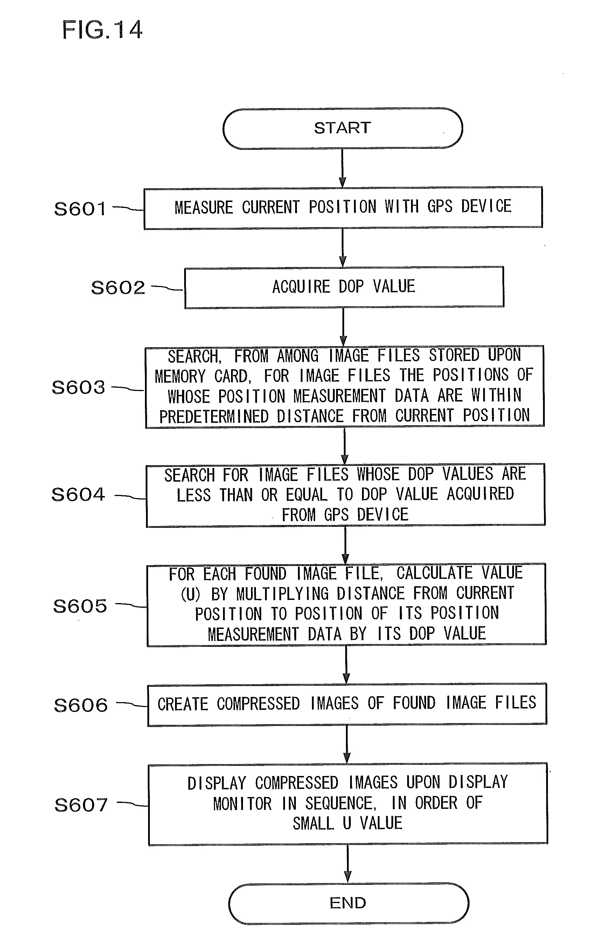

A variant embodiment of the image display method for image files in this third embodiment of the present invention will now be explained with reference to the flow chart of Fig. 14. The processing of Fig. 14 is executed by the control circuit 101 executing a program that starts when the user actuates the operation buttons 103b through 103g and selects the function of DOP thumbnail display.

In a step S601, the current position is measured by the GPS device 2. Then in a step S602, the DOP value when the current position was measured is acquired from the GPS device 2. And in a step S603 a search is made from the image files stored upon the memory card 150, for image files the position of whose position measurement data is within a predetermined distance from the current position.

Then in a step S604, from among the image files found in the step S603, a search is made for image files whose DOP values are less than or equal to the DOP value acquired from the GPS device 2. And in a step S605, for each of the image files found in the step S604, a value (U) is calculated by multiplying the distance from the current position to the position of its position measurement data, by its DOP value. Next in a step S606 compressed images are created of the images of those image files that have been found. Finally in a step S607 the compressed images of the image files are displayed in sequence, in order from the image of the image file whose U value is the smallest to the image of the image file whose U value is the largest.

### Embodiment 4

In the following, an electronic camera according to a fourth embodiment of the present invention will be explained with reference to the drawings. With the electronic camera 1 according to this fourth embodiment of the present invention, the images are displayed upon the display monitor 104 with their sizes changed. The levels for the sizes of the images is determined on the basis of their DOP values. Furthermore, the images are displayed along with maps around the positions of their position measurement data. Since the structure of the electronic camera 1 according to this fourth embodiment is no different from the structure of the electronic camera of the third embodiment, explanation of the structure of the electronic camera 1 according to the fourth embodiment will be omitted.

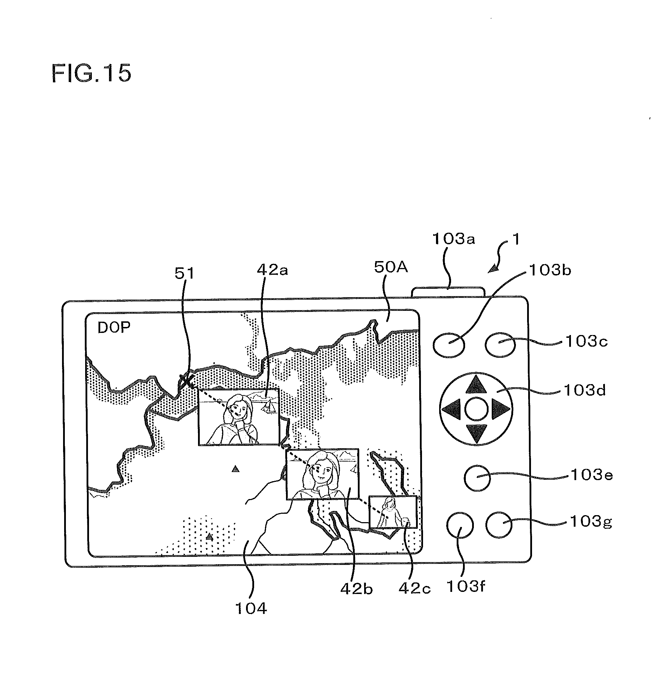

Referring to Fig. 15, the image display method for image files according to the fourth embodiment of the present invention will be explained. Fig. 15 is a figure for explanation of a display screen on the display monitor 104 in which images of image files stored upon the memory card 150 are displayed. As shown in Fig. 15, along with a map 50A, images 41a through 42c of image files whose DOP values are less than or equal to some predetermined value are displayed as compressed images upon the display monitor 104. The map 50A is a map showing the area around the current position 51 of the electronic camera 1.

The positions of the position measurement data in the image files for the images 42a through 42c are almost the same as the current position 51 of the electronic camera 1. Accordingly, the map 50A is also a map of the region around the positions of the position measurement data in the image files for the images 42a through 42c. Furthermore, the sizes of the images 42a through 42c get smaller in sequence, in order from the one whose DOP value is the smallest to the one whose DOP value is the largest, in other words from the one for which the position measurement accuracy is the highest to the one for which it is the lowest. Accordingly, the position measurement accuracy of the image 42a that is the largest is the highest (i.e. its DOP value is the smallest), and the position measurement accuracy of the image 42c that is the smallest is the worst (i.e. its DOP value is the largest).

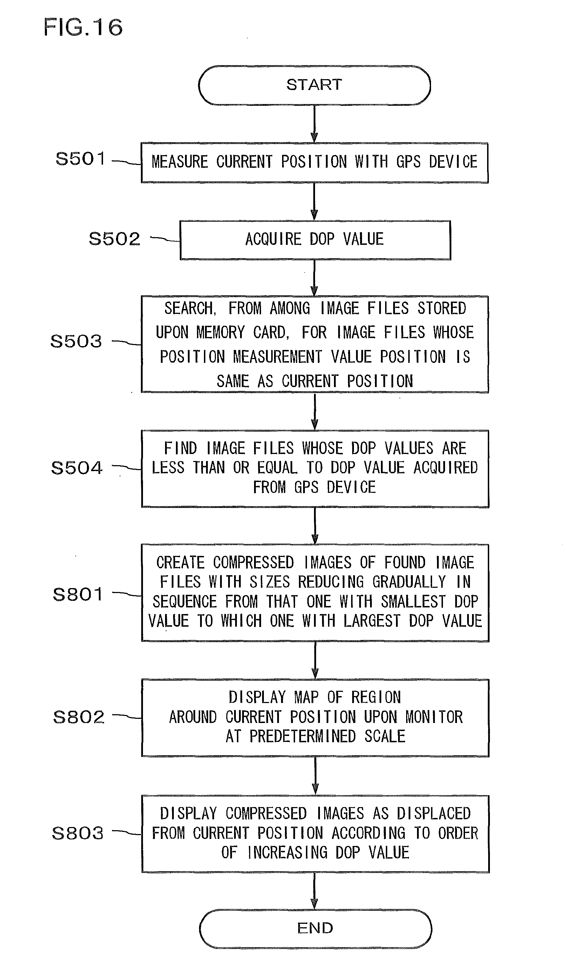

The image display process for image files in this fourth embodiment of the present invention will now be explained with reference to the flow chart of Fig. 16. The processing of Fig. 16 is executed by the control circuit 101 executing a program that starts when the user actuates the operation buttons 103b through 103g and selects the function of DOP thumbnail display. To steps that are the same as ones in the processing of Fig. 13 the same reference symbols are appended, and this explanation will principally focus upon the portions that are different from the fifth step.

After the step S504, the flow of control proceeds to a step S801. In this step S801, compressed images of the image files that were found in the step S504 are created with their sizes reducing gradually in sequence, from that image file whose DOP value is the smallest through to that image file for which the DOP value is the largest. Then in a step S802 a map of the region around the current position is displayed upon the display monitor 104 at a predetermined scale. Then in the step S803 these compressed images are displayed, while being displaced from the current position according to order of increasing DOP value so that they do not mutually overlap one another.

According to the fourth embodiment as explained above, in addition to the beneficial operational effects of the third embodiment, the following beneficial operational effects are also obtained. (1) It is arranged to display the image 42a (42b) of an image file whose position measurement accuracy is high as large, as compared to the image 42b (42c) of an image file whose position measurement accuracy is low. By doing this, it is possible to select one or more images whose position measurement accuracy is high on a preferential basis.

(2) It is arranged to display the images of image files along with a map of the region around the positions of the position measurement data of the image files. By doing this it is possible to confirm upon the map the positions at which the images of these image files were photographed and so on, and this is convenient.

(3) It is arranged to find image files whose position measurement accuracy is greater than or equal to some predetermined level, and to display the images of the image files that have been found upon the display monitor 104. By doing this, irrespective of whether or not they may actually be images that were photographed at positions outside the display range of the map, it is possible to prevent them from being displayed within the display range of the map, since their position measurement accuracies are bad.

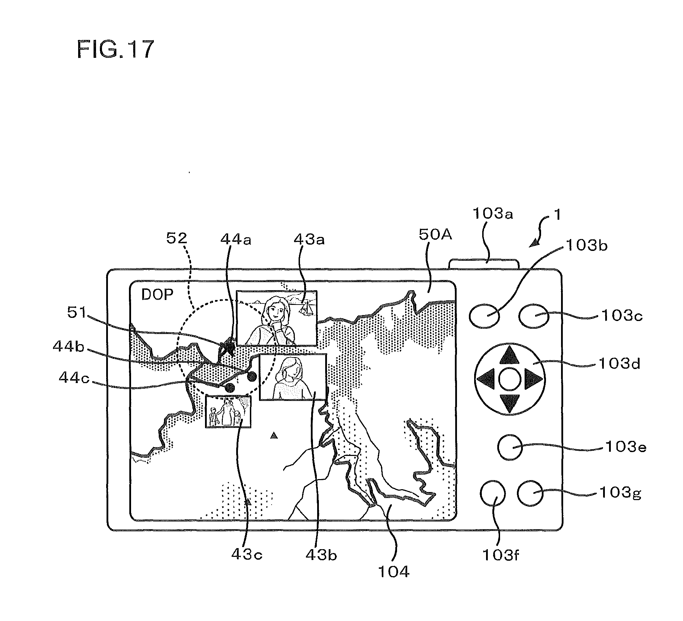

The fourth embodiment described above may be varied in the following ways. (1) In the fourth embodiment described above, images of image files having position measurement data that almost agrees with the current position of the electronic camera 1 were displayed upon the map. However, it would also be acceptable to arrange to display images of images of image files having position measurement data that is within a predetermined distance from the current position of the electronic camera 1. For example, it would be possible to arrange for images 43a through 43c to be displayed as shown in Fig. 17. Here, the position of the position measurement data of the image 43a is shown by the reference symbol 44a, the position of the position measurement data of the image 43b is shown by the reference symbol 44b, and the position of the position measurement data of the image 43c is shown by the reference symbol 44c. The positions 44a through 44c of these sets of position measurement data are within a predetermined distance 52 of the current position 51 of the electronic camera 1.

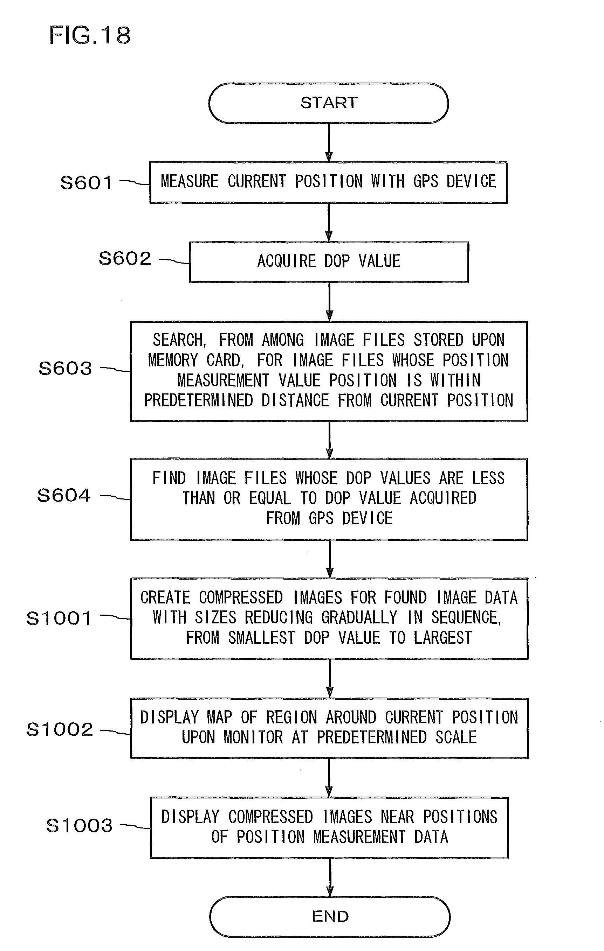

A variant embodiment of the image display process for image files in this fourth embodiment of the present invention will now be explained with reference to the flow chart of Fig. 18. The processing of Fig. 18 is executed by the control circuit 101 executing a program that starts when the user actuates the operation buttons 103b through 103g and selects the function of DOP thumbnail display. To steps that are the same as ones in the processing of Fig. 14 the same reference symbols are appended, and this explanation will principally focus upon the portions that are different from the processing of Fig. 14.

After the step S604, the flow of control proceeds to a step S1001. In this step S1001, compressed images for the image files that have been found in the step S604 are created with their sizes reducing gradually in sequence, from the one whose DOP value is the smallest through to the one whose DOP value is the largest. Then in a step S1002 a map of the region around the current position is displayed upon the display monitor 104 at a predetermined scale. Finally in a step S1003 the compressed images are displayed in the vicinity of the positions in their position measurement data.

(2) The sizes of the plurality of images displayed upon the display monitor 104 along with the map are not limited by the third embodiment. For example, it would be acceptable to arrange to make the sizes of the plurality of images that are displayed along with the map all the same. In this case as well, it would be possible to check upon the map the positions at which the images of the image files were photographed, and this is convenient. Moreover, it would also be acceptable to arrange in advance to determine the size of the images to correspond to the DOP values, and to change the sizes at which the images are displayed according to their DOP values. Thus, just by seeing the sizes of the images, it would be possible to recognize their accuracies of position measurement, and this would be convenient.

### Embodiment 5

In the following, an electronic camera according to a fifth embodiment of the present invention will be explained with reference to the drawings. With the electronic camera 1 according to this fifth embodiment of the present invention, the DOP value that is to be the standard for finding the image files to be displayed upon the display monitor 104 is determined according to the scale of the map that is being displayed upon the display monitor 104. Since the structure of the electronic camera 1 according to this fifth embodiment is not different from the structure of the electronic camera of the third embodiment, explanation of the structure of the electronic camera 1 according to the fifth embodiment will be omitted.

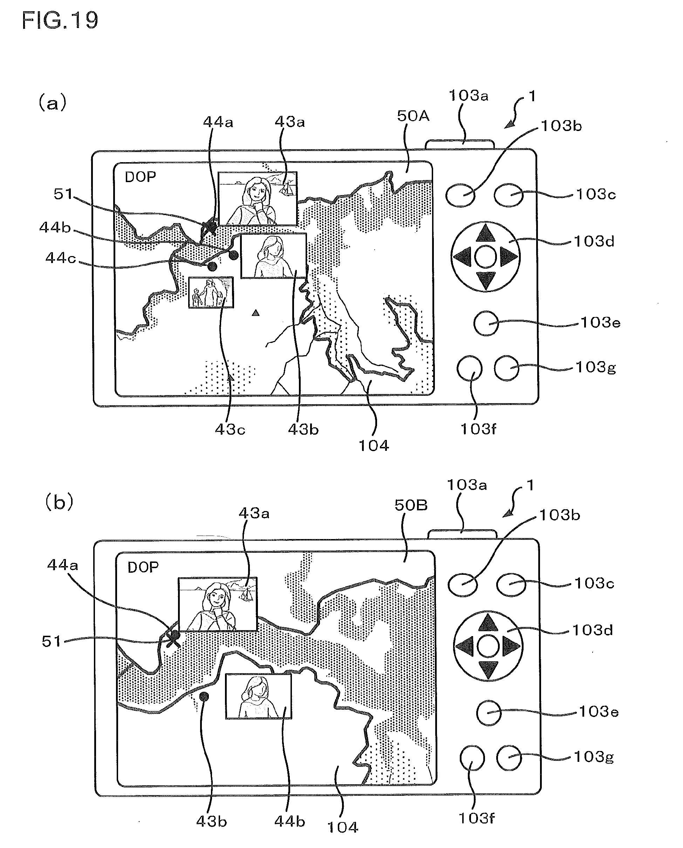

Referring to Fig. 19, the image display method for image files according to the fifth embodiment of the present invention will be explained. Fig. 19 is a figure for explanation of a display screen on the display monitor 104 in which images of image files stored upon the memory card 150 are displayed. Fig. 19(a) is a figure for explanation of a display screen upon which images are displayed over a map at a predetermined scale, and Fig. 19(b) is a figure for explanation of a display screen on which images are displayed over a map when the scale of the map has been changed towards finer as compared with the map of Fig. 19(a).

As shown in Fig. 19(a), along with a map 50A, images 43a through 43c of image files whose DOP values are less than or equal to a predetermined value are displayed as compressed images upon the display monitor 104. Here, the sizes of the images 43a through 43c reduce gradually in sequence, in order from the one whose DOP value is the smallest to the one whose DOP value is the largest.

And, as shown in Fig. 19(b), when the scale of the map is changed towards finer, the DOP value that is the standard for whether or not the image files are to be displayed is changed from the predetermined value towards a smaller value. As a result, only the image 43a and the image 43b are displayed, while the image 43c whose position measurement accuracy is worse is no longer displayed. The finer the scale of the map displayed upon the display monitor 104 becomes, the smaller does the DOP value that is used as a standard for whether or not the image files are to be displayed become; and, conversely, the wider the scale of the map displayed upon the display monitor 104 becomes, the larger does the DOP value that is used as a standard for whether or not the image files are to be displayed become.

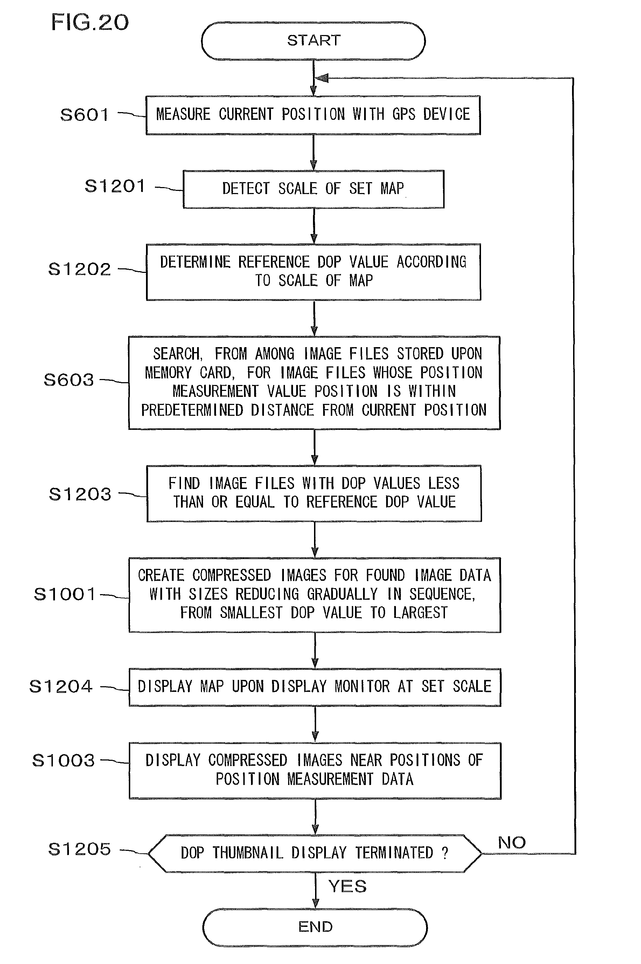

The image display process for image files in this fifth embodiment of the present invention will now be explained with reference to the flow chart of Fig. 20. The processing of Fig. 20 is executed by the control circuit 101 executing a program that starts when the user actuates the operation buttons 103b through 103g and selects the function of DOP thumbnail display. To steps that are the same as ones in the processing of Fig. 18 the same reference symbols are appended, and this explanation will principally focus upon the portions that are different from the processing of Fig. 18. Here, the explanation will be given in terms of the user being able to set the scale of the map that is displayed upon the display monitor 104 by actuating the operation buttons 103b through 103g. By doing this, the user is able to change the scale of the map.

After the step S601, the flow of control proceeds to a step S1201. In this step S1201, the scale of the map set for the electronic camera is detected. Then in a step S1202, a reference DOP value is determined according to the scale of the map. Here, the finer the scale of the map becomes, the smaller does the reference DOP value become; and, conversely, the wider the scale of the map becomes, the larger does the reference DOP value become. Then the flow of control proceeds to a step S603, and then it proceeds to a step S 1203.

In this step S1203, image files are searched for, which have DOP values less than or equal to the reference DOP value. And then the flow of control proceeds to a step S1001, and then it proceeds to a step S1204. In this step S1204, the map is displayed upon the display monitor 104 at the scale that has been set. Then the flow of control proceeds to a step S1003, and then it proceeds to a step S1205. In this step S1205, a decision is made as to whether or not DOP thumbnail display has been terminated due to actuation of the operation buttons 103b through 103g by the user. If the DOP thumbnail display has been terminated then an affirmative decision is reached in the step S1205, and this image display process terminates. But if the DOP thumbnail display has not been terminated then a negative decision is reached in the step S1205, and the flow of control returns to the step S501.

According to the fifth embodiment as explained above, in addition to the beneficial operational effects of the third embodiment, the following beneficial operational effects are also obtained.
It is arranged, when the scale of the map is changed, for the reference DOP value that is the decision standard for whether or not to display the images also to be changed on the basis of this changed scale of the map, and to display images for which the DOP values of their image files are less than or equal to the changed reference DOP value, along with the map whose scale has been changed. By doing this, it is possible to prevent images from being displayed as though they were photographed within the display range of the map, although they are images that were photographed at positions that are actually outside the display range of the map, due to the scale of the map having being changed to finer while the display range of the map has not been narrowed down.

The fifth embodiment described above may be varied in the following ways. The sizes of the images that are displayed along with the map are not limited by the fifth embodiment. For example, it would also be acceptable to arrange to make the sizes of the plurality of images that are displayed along with the map all the same. Furthermore, it would also be acceptable to arrange to determine sizes for the images in advance according to the DOP values, and to change the sizes at which the images are displayed according to their DOP values.

### Embodiment 6

In the following, an electronic camera according to a sixth embodiment of the present invention will be explained with reference to the drawings. With the electronic camera 1 according to this sixth embodiment of the present invention, the DOP value that is employed as a reference for finding the image files that are to be displayed can be set by the user. Since the structure of the electronic camera 1 according to this sixth embodiment is no different from the structure of the electronic camera of the third embodiment, explanation of the structure of the electronic camera 1 according to the sixth embodiment will be omitted.

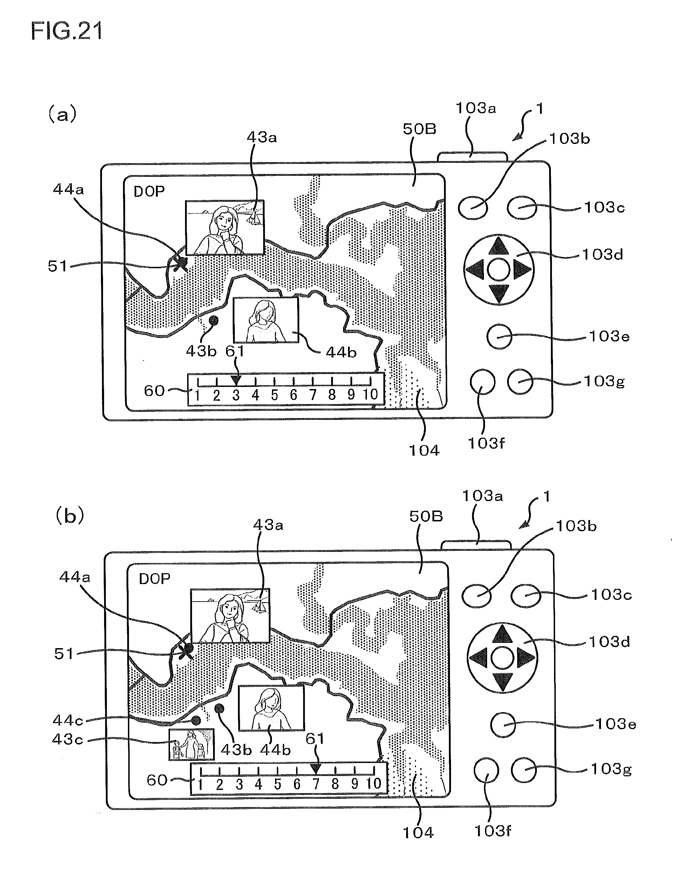

Referring to Fig. 21, the image display method for image files according to the sixth embodiment of the present invention will now be explained. Fig. 21 is a figure for explanation of a display screen on the display monitor 104 on which images of image files stored upon the memory card 150 are displayed upon a predetermined map. Along with a map 50B and images 43a through 43c, a reference DOP value display field 60 specifying a DOP value that the user has inputted by actuating the operation buttons 103b through 103g is displayed upon the display screen. A DOP value scale and an inverted triangular mark 61 that shifts upon this scale are displayed in this reference DOP value display field 60. The mark 61 shifts upon this scale of the DOP value inputted by the user. Due to this, the user is able to check the DOP value that he has himself inputted. The sizes of the images 43a through 43c reduce gradually in sequence, from the one whose DOP value is the smallest through to the one whose DOP value is the largest.

Fig. 21(a) is the display screen when the user has inputted "3" as the DOP value. The images 43a and 43b for which the DOP values of their image files are 3 or less are displayed upon this display screen. And Fig. 21(b) is the display screen when the user has inputted "7" as the DOP value. Apart from the images 43a and 43b for which the DOP values of the image files are 3 or less, also the image 43c for which the DOP value is a value greater than 3 and less than or equal to 7 is displayed upon this display screen.

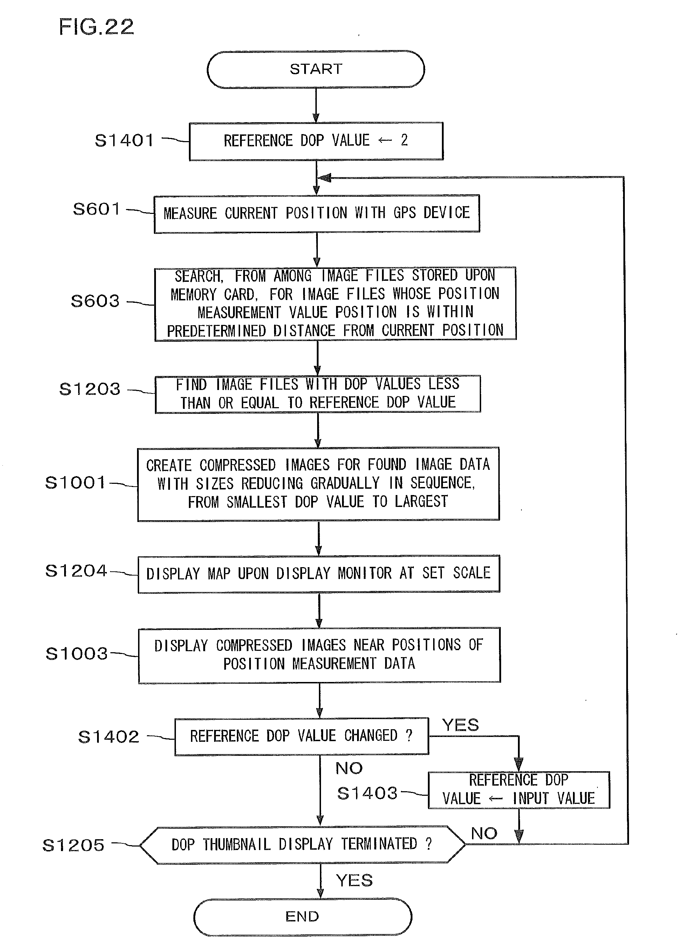

The image display process for image files in this sixth embodiment of the present invention will now be explained with reference to the flow chart of Fig. 22. The processing of Fig. 22 is executed by the control circuit 101 executing a program that starts when the user actuates the operation buttons 103b through 103g and selects the function of DOP thumbnail display. To steps that are the same as ones in the processing of Fig. 20 the same reference symbols are appended, and this explanation will principally focus upon the portions that are different from the processing of Fig. 20.

In a step S1401, the reference DOP value is set to 2. And then the flow of control proceeds to the steps S601 and S603. And, after the step S1003, the flow of control proceeds to a step S1402. In this step S1402, a decision is made as to whether or not the reference DOP value has been changed by the user actuating the operation buttons 103b through 103g and inputting a DOP value. If the reference DOP value has been changed, then an affirmative decision is reached in this step S 1402, and the flow of control proceeds to a step S1403. But if the reference DOP value has not been changed, then a negative decision is reached in this step S 1402, and the flow of control proceeds to the step S1205. In the step S 1403, the reference DOP value is changed to the DOP value that the user has inputted. Then the flow of control returns to the step S601.

According to the sixth embodiment as explained above, in addition to the beneficial operational effects of the third embodiment, the following beneficial operational effects are also obtained.

It is arranged to search for image files whose position measurement accuracy is greater than or equal to a position measurement accuracy that has been inputted by the user, and to display images of the image files that are found. By doing this, it is possible to display upon the display monitor 104 images of those image files having the position measurement accuracy desired by the user, and this is convenient.

The sixth embodiment described above may be varied in the following ways. The sizes of the plurality of compressed images that are displayed along with the map are not to be considered as being limited by the fifth embodiment. For example, it would also be acceptable to arrange to make the sizes of all of the plurality of compressed images that are displayed along with the map to be the same. Moreover, it would also be acceptable to arrange to determine the sizes of the images in advance to correspond to the DOP values, and to change the sizes of the images that are displayed according to their DOP values.

### Embodiment 7

In the following, an electronic camera according to a seventh embodiment of the present invention will be explained with reference to the drawings. With the electronic camera 1 according to this seventh embodiment of the present invention, when a single image is selected by the user from among the plurality of images that are being displayed in sequence upon the display monitor 104, a map of the region around the position of the position measurement data of the selected image is displayed upon the display monitor 104. Furthermore, the selected image is displayed upon this map. Since the structure of the electronic camera 1 according to this seventh embodiment is no different from the structure of the electronic camera of the third embodiment, explanation of the structure of the electronic camera 1 according to the seventh embodiment will be omitted.

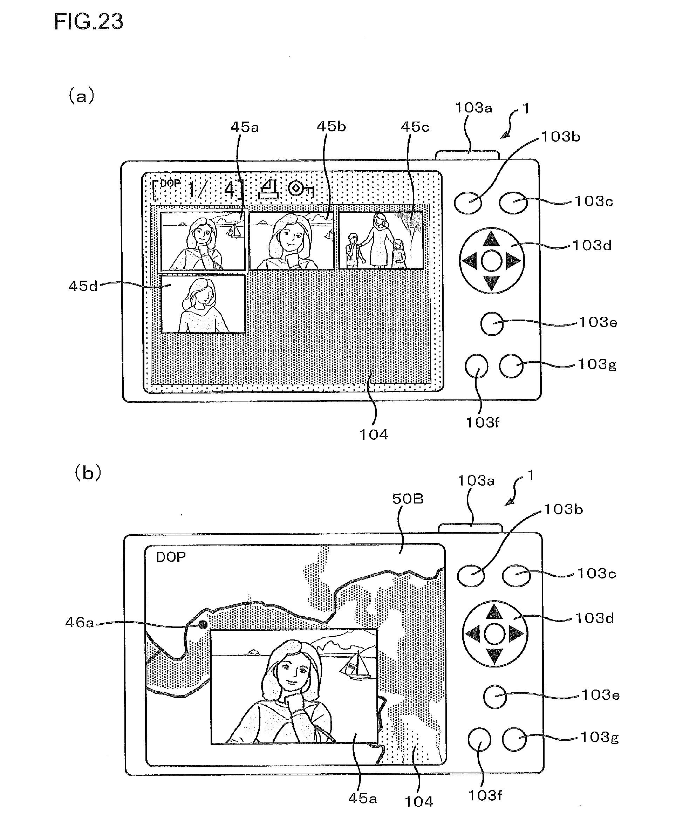

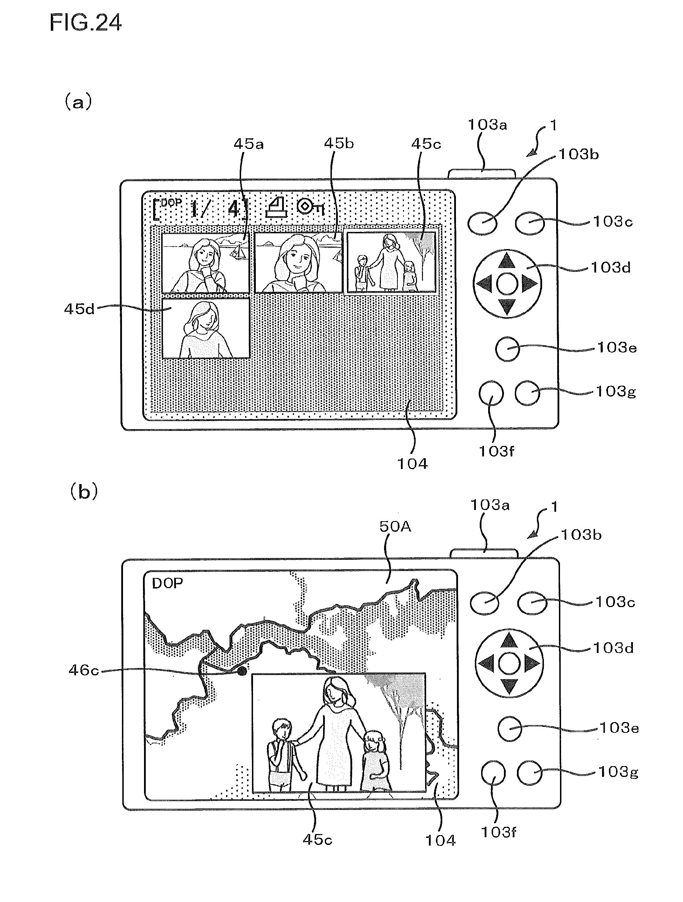

Referring to Figs. 23 and 24, the image display method for image files according to the seventh embodiment of the present invention will now be explained. Fig. 23(a) and Fig. 24(a) are figures for explanation of display screens upon which images 45a through 45d of image files whose DOP values are less than or equal to a predetermined value are displayed in sequence as compressed images. In Fig. 23(a) an image 45a has been selected by the user from among a plurality of images 45a through 45d, while in Fig. 24(a) the image 45c has been selected by the user from among the plurality of images 45a through 45d. These selections of images are performed by the user actuating the operation buttons 103b through 103g.

Fig. 23(b) is a figure for explanation of a display screen that is displayed after the image 45a has been selected in Fig. 23(a). A map 50B of the region around the position of measurement 46a of the image 45a that has been selected, and the selected image 45a, are displayed upon this display screen. The scale of the map 50B is determined on the basis of the position measurement accuracy of the position measurement data of the image 45a. When this position measurement accuracy is high, in other words when the DOP value is small, a fine-scale map is displayed; but, when the position measurement accuracy is bad, in other words when the DOP value is large, a wide-are map is displayed.

And Fig. 24(b) is a figure for explanation of a display screen that is displayed after the image 45c has been selected in Fig. 24(a). A map 50A of the region around the position of measurement 46c of the image 45c that has been selected, and the selected image 45c, are displayed upon this display screen. Since the position measurement accuracy of the image 45c is bad as compared to that of the image 45a, accordingly the scale of the map 50A is wider-area as compared to that of the map 50B. It should be understood that the sizes of the images 45a and 45c that are displayed along with the maps 50A and 50B are the same.

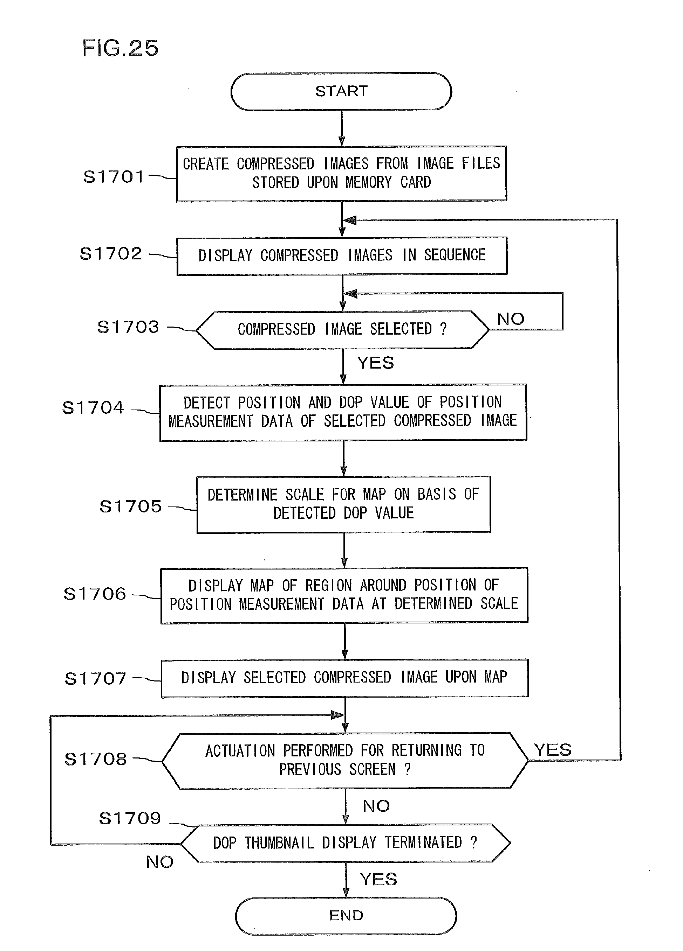

The image display process for image files in this seventh embodiment of the present invention will now be explained with reference to the flow chart of Fig. 25. The processing of Fig. 25 is executed by the control circuit 101 executing a program that starts when the user actuates the operation buttons 103b through 103g and selects the function of DOP thumbnail display. Here, it will be explained how the user is able to select a desired image from among the images that are being displayed in sequence upon the display monitor 104 by actuating the operation buttons 103b through 103g.

In a step S1701, compressed images are created from image files stored upon the memory card 150. Then in a step S1702 these compressed images are displayed in sequence upon the display monitor 104. And in a step S 1703 a decision is made as to whether or not a compressed image has been selected. If a compressed image has been selected, an affirmative decision is reached in the step S 1703, and the flow of control proceeds to a step S 1704. But if no compressed image has been selected, the step S 1703 is repeated.

In the step S1704, the position of the position measurement data and the DOP value of the selected compressed image are detected. Then in a step S1705 a scale is determined for the map on the basis of the detected DOP value. As described above, when the DOP value is small, the scale of the map is set to fine, while when the DOP value is large, the scale of the map is set to wide-area. Then in a step S1706 the map of the region around the position of the position measurement data is displayed at the determined scale. And in a step S1707 the selected compressed image is displayed upon this map.

In a step S1708 a decision is made as to whether or not, by the user actuating the operation buttons 103b through 103g, actuation has been performed for returning to the previous screen. If actuation has been performed to return to the previous screen then an affirmative decision is reached in this step S 1708, and the flow of control returns to the step S 1702. But if actuation has not been performed to return to the previous screen then a negative decision is reached in this step S 1708, and the flow of control proceeds to a step S 1709. In this step S 1709, a decision is made as to whether or not DOP thumbnail display has been terminated by the user actuating the operation buttons 103b through 103g. If DOP thumbnail display has been terminated then an affirmative decision is reached in this step S1709 and this processing flow terminates. But if DOP thumbnail display has not been terminated then a negative decision is reached in this step S 1709 and the flow of control returns to the step S1708.

According to the seventh embodiment as explained above, in addition to the beneficial operational effects of the third embodiment, the following beneficial operational effects are also obtained.
(1) When a single image is selected from among the images that are displayed in sequence upon the display monitor 104, it is arranged to display a map for the region around the position of the position measurement data for the image file of this selected image. Due to this, it is possible to check upon the map the position and so on at which the image of this image file was photographed, and this is convenient.

(2) When a single image is selected from among the images that are displayed in sequence upon the display monitor 104, it is arranged to determine the scale of the map that is displayed on the basis of the position measurement accuracy for the image file of that selected image. Due to this, it is possible to prevent an image from being displayed as though it was photographed within the display region of the map because its position measurement accuracy is bad, even though actually it is an image that was photographed at a position outside the display range of the map.

The seventh embodiment described above may be varied in the following ways. (1) When displaying images upon the display monitor 104 for selection by the user, it would also be acceptable to arrange to display only images of those image files that have position measurement accuracy greater than or equal to a predetermined level. This is because, if images whose position measurement accuracy is remarkably bad are displayed along with the map, the positions of their position measurement data cannot be easily understood from looking at the map, since it must be considered that the scale of the map that is determined on the basis of their position measurement accuracies is remarkably wide-area.

(2) When an image that is displayed in sequence is selected by the user, it is arranged to display the selected image along with the map. However, it would also be acceptable to arrange for only the map to be displayed. In this case as well, it would be possible to check upon the map the position at which the image of the image file was photographed, and so on.

(3) it would also be acceptable to arrange to determine the sizes of the images in advance according to the DOP values, and to vary the sizes of the displayed images along with the map according to their DOP values. This is convenient, because it would be possible to recognize the position measurement accuracy of an image only by seeing its size. Moreover, it would also be acceptable to arrange to determine an order for lining up the image files on the basis of their position measurement accuracies and to line up and display the images in that sequence, so that the sizes of the images that are displayed along with the map can be determined according to that order.

### Variant Embodiments

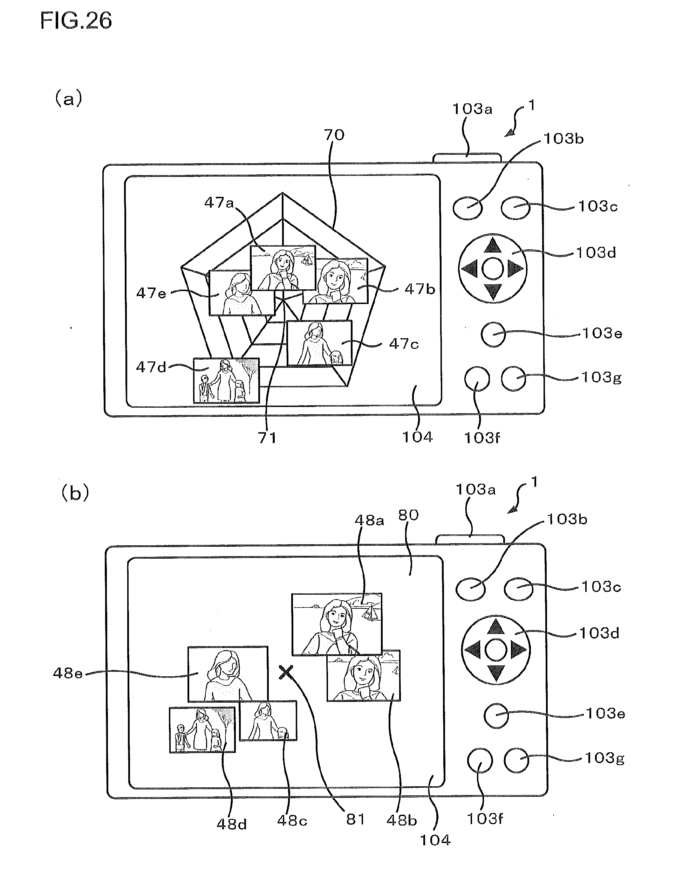

(1) In the second through the fifth embodiments described above, the images were displayed upon a map. However, it would also be acceptable to arrange to display the images 47a through 47e as superimposed upon a radar chart 70, as shown in Fig. 26(a). Here, the closer an image is to the center 71 of the radar chart 70, the smaller the DOP value of that image is, while, the further an image is away from the center 71, the larger the DOP value of that image is. Thus it is possible to ascertain the position measurement accuracies of the images 47a through 47e visually, and this is convenient. It should be understood that it would also be acceptable to arrange to change the sizes of the images 47a through 47e according to the sequence of their DOP values, or according to their DOP values.

Moreover, it would also be acceptable to arrange to display those images for which the positions of the position measurement data are within a predetermined distance from the current position of the electronic camera 1 while changing their sizes, and, as shown in Fig. 26(b), to display the current position of the electronic camera 1, while not displaying any map. In this case as well, it would be possible to determine which of the images are ones for which the positions of their position measurement data are close to the current position 81, and which are ones for which these positions are far away therefrom.

(2) In the embodiments described above, the DOP value when the current position was measured by the GPS device 2 is taken as being the reference when searching for image files. However, the DOP value that is taken as being the reference when searching for image files is not to be limited to these embodiments, if it is a value larger than a DOP value of such poor position measurement accuracy that a ground point that is remarkably far away from the ground point at which photography was actually performed can be mistakenly recognized as being the ground point of photography.

(3) The numerical value for determining whether or not to display an image is not limited to being its DOP value; it need only be a numerical value that can specify the accuracy of position measurement thereof.

(4) While in the embodiments described above the GPS device 2 was attached to the electronic camera 1, it would also be acceptable to arrange for the GPS device 2 to be housed internally to the electronic camera 1.

(5) The present invention is not limited to an electronic camera 1 that is provided with a display monitor 104; any image display device would be acceptable. For example, a portable telephone that is endowed with a GPS function would also be acceptable.

It would also be acceptable to arrange for the processing of the embodiments described above for image display and so on to be performed with a personal computer. In this type of case, a program for performing this processing could be supplied via a recording medium such as a CD-ROM or the like, or via a data signal such as the internet or the like. In other words, the processing program may be supplied as a computer-readable computer program product in various formats, such as a recording medium or a data signal (i.e. a carrier wave) or the like.

It would be possible to combine one or a plurality of the above embodiments and variant embodiments. These variant embodiments may also be combined together in any manner. For example, with the image display of the first embodiment, it would be acceptable to arrange to change the display according to the position measurement accuracy DOP value, as in the third through seventh embodiments.

While various embodiments and variant embodiments have been explained above, the present invention should not be considered as being limited thereby. Within the scope of the technical concept of the present invention, various other modes may be conceived that are also included within the range of the present invention.

The contents of the disclosures of the following applications, upon which priority is claimed, are hereby incorporated herein by reference:
Japanese Patent Application No. 2008-172,343 (applied on July 1, 2008);
Japanese Patent Application No. 2008-182,672 (applied on July 14, 2008);

## Claims

1. An imaging device, comprising:
an imaging unit that photographs an image;
a position measurement unit that measures a photographic position when the image is photographed by the imaging unit;
a control unit that determines whether or to not to record data for the photographic position along with the photographed image; and
a recording unit that, according to a determination by the control unit, either records only the photographed image, or records the photographed image and the data for the photographic position.

2. An imaging device according to Claim 1, wherein:
the control unit determines whether or not to record the data for the photographic position along with the photographed image, based on the photographic position.

3. An imaging device according to Claim 2, further comprising:
an accuracy storage unit that sets whether or not to record photographic position data in a specified region having a predetermined extent, and a recording accuracy for the photographic position data in case that the photographic position data is to be recorded, wherein:
the control unit compares the photographic position with the specified region in the accuracy storage unit and determines whether or not to record the data for the photographic position and a recording accuracy for the data for the photographic position in case that the data for the photographic position is to be recorded along with the photographed image.

4. An imaging device according to Claim 2 or Claim 3, further comprising:
a person storage unit that stores characteristics for a specific person; and
a person recognition unit that recognizes the specific person in the photographed image by referring to the person storage unit, wherein:
the control unit converts the recording accuracy for the data for the photographic position to low accuracy, if the specific person has been recognized in the photographed image.

5. An imaging device according to Claim 3 or Claim 4, wherein:
the position measurement unit outputs a position measurement accuracy of the data for the photographic position; and
if the position measurement accuracy is lower than the recording accuracy determined by the control unit, the control unit repeatedly measures the photographic position with the position measurement unit, until the position measurement accuracy meet the recording accuracy.

6. An imaging device according to Claim 1, wherein:
the control unit determines whether or not to record the data for the photographic position along with the photographed image, based on the photographed image.

7. An imaging device according to Claim 6, further comprising:
a person storage unit that stores characteristics for a specific person; and
a person recognition unit that refers to the person storage unit, and recognizes the specific person in the photographic image, wherein
the control unit determines the recording accuracy according to whether or not the specific person has been recognized in the photographed image by the person recognition unit.

8. An imaging device, comprising:
an imaging unit that photographs an image;
a position measurement unit that measures a photographic position when the image is photographed by the imaging unit;
a control unit that determines a recording accuracy for data for the photographic position measured by the position measurement unit; and
a recording unit that records the photographed image, the data for the photographic position, and the recording accuracy determined by the control unit.

9. An imaging device according to Claim 8, wherein:
the control unit determines the recording accuracy for the data for the photographic position based on the photographic position.

10. An imaging device according to Claim 8, wherein:
the control unit determines the recording accuracy for the data for the photographic position based on the photographed image.

11. An imaging device according to any one of Claims 3 through 10, further comprising:
a display control unit that changes a way in which the photographed image recorded by the recording unit is displayed, according to the recording accuracy recorded by the recording unit.

12. An image display device, comprising:
an image file search unit that finds an image file having a position measurement accuracy higher than or equal to a predetermined position measurement accuracy from among a plurality of image files each having position measurement data and information for position measurement accuracy of the position measurement data; and
an image file display control unit that displays an image of an image file that has been found by the image file search unit upon a display device.

13. An image display device according to Claim 12, wherein:
the image file display control unit displays images for image files that have been found in sequence, in order from an image of an image file whose position measurement accuracy is the highest through to an image of an image file whose position measurement accuracy is the lowest.

14. An image display device according to Claim 12 or Claim 13, wherein:
the image file display control unit displays an image of an image file whose position measurement accuracy is high as larger, as compared to an image of an image file whose position measurement accuracy is low.

15. An image display device according to any one of Claims 12 through 14, further comprising:
a current position detection unit that detects a current position of the image display device, wherein:
the image file search unit searches, among the plurality of image files, for image files that each have position measurement data matching the current position detected by the current position detection unit, or that each have position measurement data with a position within a predetermined distance from the current position, and finds, from among the image files that have been searched, image files that each have a position measurement accuracy higher than or equal to the predetermined position measurement accuracy.

16. An image display device according to Claim 12, further comprising:
a current position detection unit that detects a current position of the image display device, wherein:
the image file display control unit displays the image of the image file in sequence, in order according to a value obtained by multiplying a distance from the current position to a position of the position measurement data by the position measurement accuracy.

17. An image display device according to Claim 16, wherein:
the image file search unit searches, among the plurality of image files, for image files that each have position measurement data matching the current position detected by the current position detection unit, or that each have position measurement data with a position within a predetermined distance from the current position, and finds, from among the image files that have been searched, image files that each have a position measurement accuracy higher than or equal to the predetermined position measurement accuracy.

18. An image display device according to any one of Claims 12 through 17, wherein:
the image file display control unit displays the image of the image file along with a map of a region around a position of the position measurement data in the image file.

19. An image display device according to Claim 18, further comprising:
a map scale change unit that changes a scale of the map, wherein:
the image file search unit, when the scale of the map is changed by the map scale change unit, performs searching after having changed the predetermined position measurement accuracy based on the scale of the map that has been changed; and
the image file display control unit displays the image of the image file found by the image file search unit, along with the map whose scale has been changed by the map scale change unit.

20. An image display device according to any one of Claims 12 through 17, wherein:
the image file display control unit displays the image of the image file along with a radar chart.

21. An image display device according to Claim 13, further comprising:
an image input unit that inputs a selected image from among images displayed by the image file display control unit; and
a map display control unit that displays a map of a region around a position of the position measurement data in the image file of the image inputted by the image input unit.

22. An image display device according to Claim 21, wherein:
the map display control unit determines the scale of the map that is displayed based on the position measurement accuracy in the image file of the image inputted by the image input unit.

23. An image display device according to any one of Claims 12 through 22, further comprising:
a position measurement accuracy input unit that inputs a position measurement accuracy, wherein:
the image file search unit performs searching by taking the position measurement accuracy inputted by the measurement accuracy input unit as the predetermined measurement accuracy.

24. An electronic camera, comprising:
an image display device according to any one of Claims 12 through 23.
